# EUROPEAN PATENT APPLICATION

(11) **EP 3 151 463 A1**
(43) Date of publication of application: **05.04.2017**
(21) Application number: 16190618.5
(22) Date of filing: 26.09.2016
(51) Int. Cl.: H04L 12/18, H04N 7/15, H04L 29/08, H04L 29/06

(54) **TRANSMISSION MANAGEMENT SYSTEM AND RELAY DEVICE SELECTING METHOD**

(30) Priority: 02.10.2015 JP 2015197084; 07.12.2015 JP 2015238706
(71) Applicant: Ricoh Company, Ltd., Tokyo 143-8555 (JP)
(72) Inventor: KANDA, Hiroyuki, Tokyo, 143-8555 (JP)
(74) Representative: Schwabe - Sandmair - Marx

(57) **Abstract**

A transmission management system is for connecting two or more transmission terminals among a plurality of transmission terminals to transmit content data between the two or more transmission terminals via a relay device. The transmission management system includes a transmitter configured to transmit, to the relay device, a request to relay the content data; a receiver configured to receive, from the relay device that has received the request, a response to the request; and a selector configured to select the relay device to relay the content data based on a response time from when the request is sent to when the response is received.

## Description

### BACKGROUND OF THE INVENTION

### 1. Field of the Invention

The present invention relates to a transmission management system and a relay device selecting method.

### 2. Description of the Related Art

In recent years, transmission systems for transmitting content data via a communication network such as the Internet, have become widely used. An example of such a transmission system is a television (TV) conference system for transmitting image data and voice sound data between terminals.

With respect to the transmission system as described above, there is known a technology of distributing the load of relay devices that relay the transmission of content data.

For example, Patent Document 1 discloses a technology with respect to a transmission system of selecting two or more relay devices having Internet Protocol (IP) addresses that are close to an IP address of a terminal, from among a plurality of relay devices. Then, a relay device requiring the shortest time for transmitting and receiving data between terminals is selected from among the two or more relay devices that have been selected.

Patent Document 1: Japanese Unexamined Patent Application Publication No. 5691396

A problem to be solved by an embodiment of the present invention is to provide a technology for reducing congestion in a relay device.

### SUMMARY OF THE INVENTION

An aspect of the present invention provides a transmission management system and a relay device selecting method in which one or more of the above-described disadvantages are reduced.

According to one aspect of the present invention, there is provided a transmission management system for connecting two or more transmission terminals among a plurality of transmission terminals to transmit content data between the two or more transmission terminals via a relay device, the transmission management system including a transmitter configured to transmit, to the relay device, a request to relay the content data; a receiver configured to receive, from the relay device that has received the request, a response to the request; and a selector configured to select the relay device to relay the content data based on a response time from when the request is sent to when the response is received.

According to one embodiment of the present invention, congestion in a relay device can be reduced.

### BRIEF DESCRIPTION OF THE DRAWINGS

Other objects, features and advantages of the present invention will become more apparent from the following detailed description when read in conjunction with the accompanying drawings, in which:
FIG. 1 is a schematic diagram illustrating a transmission system according to a first embodiment of the present invention;
FIG. 2 is a conceptual diagram illustrating a state of transmitting and receiving image data, voice sound data, and various kinds of management information in the transmission system according to the first embodiment of the present invention;
FIGS. 3A through 3C are conceptual diagrams for describing the image quality of image data according to the first embodiment of the present invention;
FIG. 4 is an external view of a terminal according to the first embodiment of the present invention;
FIG. 5 is a block diagram illustrating a hardware configuration of the terminal according to the first embodiment of the present invention;
FIG. 6 is a block diagram illustrating a hardware configuration of a management system, a relay device, or a program providing system according to the first embodiment of the present invention;
FIG. 7 is a functional block diagram of the terminal, the relay device, and the management system included in the transmission system according to the first embodiment of the present invention;
FIG. 8 is a conceptual diagram illustrating a quality change management table according to the first embodiment of the present invention;
FIG. 9 is a conceptual diagram illustrating a relay device management table according to the first embodiment of the present invention;
FIG. 10 is a conceptual diagram illustrating a terminal authentication management table according to the first embodiment of the present invention;
FIG. 11 is a conceptual diagram illustrating a terminal management table according to the first embodiment of the present invention;
FIG. 12 is a conceptual diagram illustrating a destination list management table according to the first embodiment of the present invention;
FIG. 13 is a conceptual diagram illustrating a session management table according to the first embodiment of the present invention;
FIG. 14 is a conceptual diagram illustrating an address priority level management table according to the first embodiment of the present invention;
FIG. 15 is a conceptual diagram illustrating a transmission speed priority level management table according to the first embodiment of the present invention;
FIG. 16 is a conceptual diagram illustrating a quality management table according to the first embodiment of the present invention;
FIG. 17 is a conceptual diagram illustrating a response time management table according to the first embodiment of the present invention;
FIG. 18 is a functional block diagram of a relay device selecting unit according to the first embodiment of the present invention;
FIG. 19 is a sequence diagram of operations of connecting a session of communicating media between terminals according to the first embodiment of the present invention;
FIG. 20 is a flowchart of an example of a relay device selection process based on the response time according to the first embodiment of the present invention;
FIG. 21 is a sequence diagram of a process of managing state information indicating the operating state of each relay device according to the first embodiment of the present invention;
FIG. 22 is a sequence diagram of a process of the preparation stage of starting remote communication between terminals according to the first embodiment of the present invention;
FIG. 23 is a sequence diagram of a process of requesting to start communication according to the first embodiment of the present invention;
FIG. 24 is a flowchart of a process of narrowing down the relay devices according to the first embodiment of the present invention;
FIG. 25 is a diagram illustrating a calculated state of points of the priority level when performing the process of narrowing down the relay devices according to the first embodiment of the present invention;
FIG. 26 is a sequence diagram of a process of giving permission to a request to start communication according to the first embodiment of the present invention;
FIG. 27 is a sequence diagram of a process of requesting to relay the call data according to the first embodiment of the present invention;
FIG. 28 is a sequence diagram of a process of sending and receiving image data and voice sound data between transmission terminals according to the first embodiment of the present invention;
FIG. 29 is a conceptual diagram illustrating a terminal management table according to a second embodiment of the present invention;
FIG. 30 is a conceptual diagram illustrating a response time management table according to the second embodiment of the present invention; and
FIG. 31 is a flowchart of an example of the relay device selection process based on the response time according to the second embodiment of the present invention.

### DETAILED DESCRIPTION OF THE PREFERRED EMBODIMENTS

In the technology of the related art, when requests from terminals to connect to a session for transmitting content data are temporarily concentrated, connection requests to a relay device from terminals are temporarily rapidly increased. Therefore, congestion occurs in the relay device, and a long time is taken to complete the connection to the session.

Embodiments of the present invention will be described by referring to the accompanying drawings.

### [First embodiment]

### «General arrangement of first embodiment»

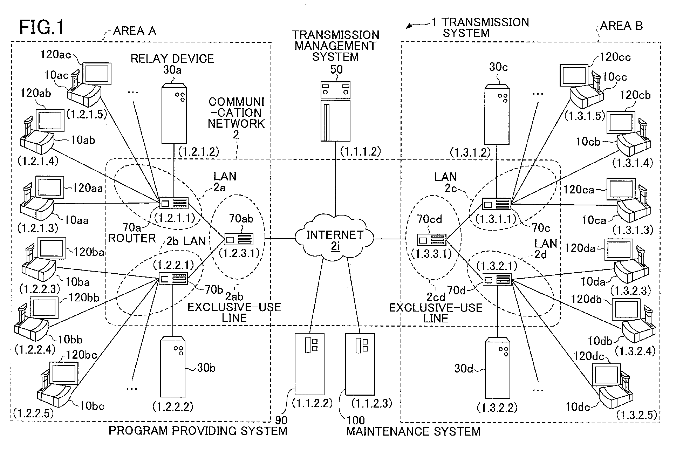

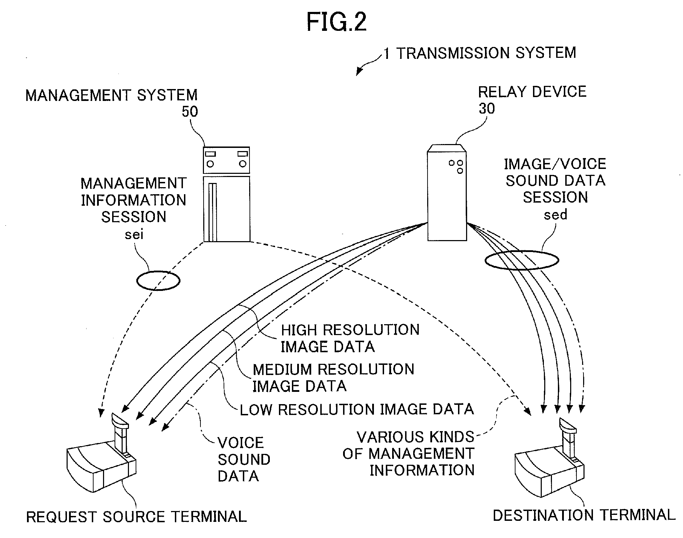

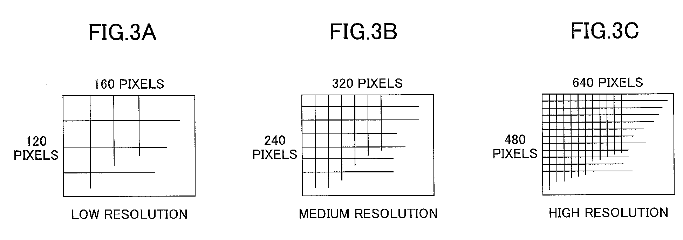

FIG. 1 is a schematic diagram illustrating a transmission system 1 according to a first embodiment of the present invention. FIG. 2 is a conceptual diagram illustrating a state of transmitting and receiving image data, voice sound data, and various kinds of management information in the transmission system 1 according to the first embodiment of the present invention. FIGS. 3A through 3C are conceptual diagrams for describing the image quality of image data according to the first embodiment of the present invention.

Furthermore, the transmission system 1 includes a data providing system for transmitting content data in one direction from one transmission terminal to another transmission terminal via a transmission management system, and a communication system for transmitting information and emotions, etc., between a plurality of (two or more) transmission terminals via the transmission management system. The communication system is a system for transmitting information and emotions, etc., between a plurality of communication terminals (corresponding to "transmission terminals") via a communication management system (corresponding to "transmission management system"). Examples of a communication system are a TV conference system and a TV telephone system, etc.

In the present embodiment, a description is given of a transmission system, a transmission management system, and a transmission terminal, assuming that a TV conference system is an example of a communication system, a TV conference management system is an example of a communication management system, and a TV conference terminal is an example of a communication terminal. That is, the transmission terminal and the transmission management system according to the first embodiment of the present invention are not only applied to a TV conference system, but also to a communication system or a transmission system.

First, the transmission system 1 illustrated in FIG. 1 is constructed by a plurality of transmission terminals (10aa, 10ab, and so on), displays (120aa, 120ab, and so on) for the transmission terminals (10aa, 10ab, and so on), a plurality of relay devices (30a, 30b, 30c, and 30d), a transmission management system 50, a program providing system 90, and a maintenance system 100.

The transmission terminals 10 transmit and receive image data and voice sound data, which are examples of content data.

Note that in the following, a "transmission terminal" is simply referred to as a "terminal", and a "transmission management system" is simply referred to as a "management system". Furthermore, any one of the plurality of transmission terminals (10aa, 10ab, and so on) is referred to as a "transmission terminal 10", any one of the plurality of displays (120aa, 120ab, and so on) is referred to as a "display 120", and any one of the plurality of relay devices (30a, 30b, 30c, and 30d) is referred to as a "relay device 30". Furthermore, a terminal that is the request source requesting to start a TV conference is referred to as a "request source terminal", and a terminal that is the destination (relay destination), which is the request destination, is referred to as a "destination terminal".

Furthermore, as illustrated in FIG. 2, in the transmission system 1, between the request source terminal and the destination terminal, a management information session sei is established via the management system 50, for transmitting and receiving various kinds of management information. Furthermore, between the request source terminal and the destination terminal, four sessions are established via the relay device 30 for transmitting and receiving four kinds of data items including high resolution image data, medium resolution image data, low resolution image data, and voice sound data. Here, these four sessions are collectively indicated as an image/voice sound data session sed.

Here, a description is given of the resolution of images corresponding to the image data handled in the present embodiment. As illustrated in FIG. 3A, there is an image having low resolution as a base image, including 160 pixels in the horizontal direction and 120 pixels in the vertical direction. As illustrated in FIG. 3B, there is an image having medium resolution including 320 pixels in the horizontal direction and 240 pixels in the vertical direction. As illustrated in FIG. 3C, there is an image having high resolution including 640 pixels in the horizontal direction and 480 pixels in the vertical direction. When the data is transmitted through a narrow bandwidth path, among the above images, image data having low image quality, including only image data of low resolution that is a base image, is relayed. When the data is transmitted through a relatively wide bandwidth, image data having medium image quality, including image data of low resolution that is a base image and image data of medium resolution, is relayed. Furthermore, when the data is transmitted through a very wide bandwidth, image data having high image quality, including image data of low resolution that is a base image, image data of medium resolution, and image data of high resolution, is relayed.

The relay device 30 illustrated in FIG. 1 relays the content data between a plurality of terminals 10. The management system 50 connects two or more terminals 10 among the plurality of terminals 10 via the relay device 30, such that content data can be transmitted between the two terminals 10. The management system 50 manages, in an integrated manner, login authentication from the terminal 10, management of the call status of the terminal 10, management of a destination list, and the communication status of the relay device 30. Note that the image of the image data may be a video or a still image, or may be both a video and a still image.

The plurality of routers (70a, 70b, 70c, 70d, 70ab, and 70cd) select an optimum path for the image data and the voice sound data. Note that in the following, any one of the routers (70a, 70b, 70c, 70d, 70ab, and 70cd) is referred to as a "router 70".

The program providing system 90 includes a Hard Disk (HD) 204 described below, storing a terminal-use program for causing the terminal 10 to realize various functions (or for causing the terminal 10 to function as various units). The program providing system 90 can send the terminal-use program to the terminal 10. Furthermore, the HD 204 of the program providing system 90 also stores a relay device-use program for causing the relay device 30 to realize various functions (or for causing the relay device 30 to function as various units). The program providing system 90 can send the relay device-use program to the relay device 30. Furthermore, the HD 204 of the program providing system 90 also stores a transmission management-use program for causing the management system 50 to realize various functions (or for causing the management system 50 to function as various units). The program providing system 90 can send the transmission management-use program to the management system 50.

The maintenance system 100 is a computer for maintaining, managing, or repairing at least one of the terminal 10, the relay device 30, the management system 50, and the program providing system 90. For example, when the maintenance system 100 is disposed domestically, and the terminal 10, the relay device 30, the management system 50, and the program providing system 90 are disposed overseas, the maintenance system 100 remotely maintains, manages, or repairs at least one of the terminal 10, the relay device 30, the management system 50, and the program providing system 90 via a communication network 2. Furthermore, the maintenance system 100 maintains the machine number, the manufacturing number, the sales destination, and the repair and inspection, or manages the failure history, with respect to at least one of the terminal 10, the relay device 30, the management system 50, and the program providing system 90, without involving the communication network 2.

Incidentally, the terminals (10aa, 10ab, 10ac, and so on), the relay device 30a, and the router 70a are communicatively connected by a LAN 2a. The terminals (10ba, 10bb, 10bc, and so on), the relay device 30b, and the router 70b are communicatively connected by a LAN 2b. Furthermore, the LAN 2a and the LAN 2b are communicatively connected by an exclusive-use line 2ab including the router 70ab, and the LAN 2a and the LAN 2b are constructed in a predetermined area A. For example, the area A is Japan, the LAN 2a is constructed in a business office in Tokyo, and the LAN 2b is constructed in a business office in Osaka.

On the other hand, the terminals (10ca, 10cb, 10cc, and so on), the relay device 30c, and the router 70c are communicatively connected by a LAN 2c. The terminals (10da, 10db, 10dc, and so on), the relay device 30d, and the router 70d are communicatively connected by a LAN 2d. Furthermore, the LAN 2c and the LAN 2d are communicatively connected by an exclusive-use line 2cd including the router 70cd, and the LAN 2c and the LAN 2d are constructed in a predetermined area B. For example, the area B is the USA, the LAN 2c is constructed in a business office in New York, and the LAN 2d is constructed in a business office in Washington D.C. The area A and the area B are communicatively connected to each other via the Internet 2i from the respective routers (70ab and 70cd).

Furthermore, the management system 50 and the program providing system 90 are communicatively connected with the terminals 10 and the relay devices 30 via the Internet 2i. The management system 50 and the program providing system 90 may be disposed in the area A or the area B or in another area.

Note that in the present embodiment, the communication network 2 is constructed by the LAN 2a, the LAN 2b, the exclusive-use line 2ab, the Internet 2i, the exclusive-use line 2cd, the LAN 2c, and the LAN 2d. The communication network 2 may not only include portions where wired communication is performed, but also portions where wireless communication is performed by Wireless Fidelity (WiFi) and Bluetooth (registered trademark), etc.

Furthermore, in FIG. 1, the group of four numbers indicated below each of the terminals 10, each of the relay devices 30, the management system 50, each of the routers 70, and the program providing system 90, indicates an IP address in a general IPv4 in a simplified manner. For example, the IP address of the terminal 10aa is "1.2.1.3". Furthermore, IPv6 may be used instead of IPv4; however, as a matter of simplification, IPv4 is used in the descriptions.

Note that the terminals 10 may not only be used for calls between a plurality of business offices and calls between different rooms in the same business office, but may also be used for calls within the same room, calls between an outdoor location and an indoor location, or calls between an outdoor location and another outdoor location. When the terminals 10 are used outdoors, wireless communication is performed by a mobile phone communication network.

### «Hardware configuration of embodiment»

Next, a description is given of a hardware configuration of the present embodiment. In the present embodiment, when a delay occurs in the reception of image data by the terminal 10 that is the destination (relay destination), the relay device 30 changes the resolution of the image corresponding to the image data, and then the image data, in which the resolution has been changed, is sent to the terminal 10 that is the relay destination.

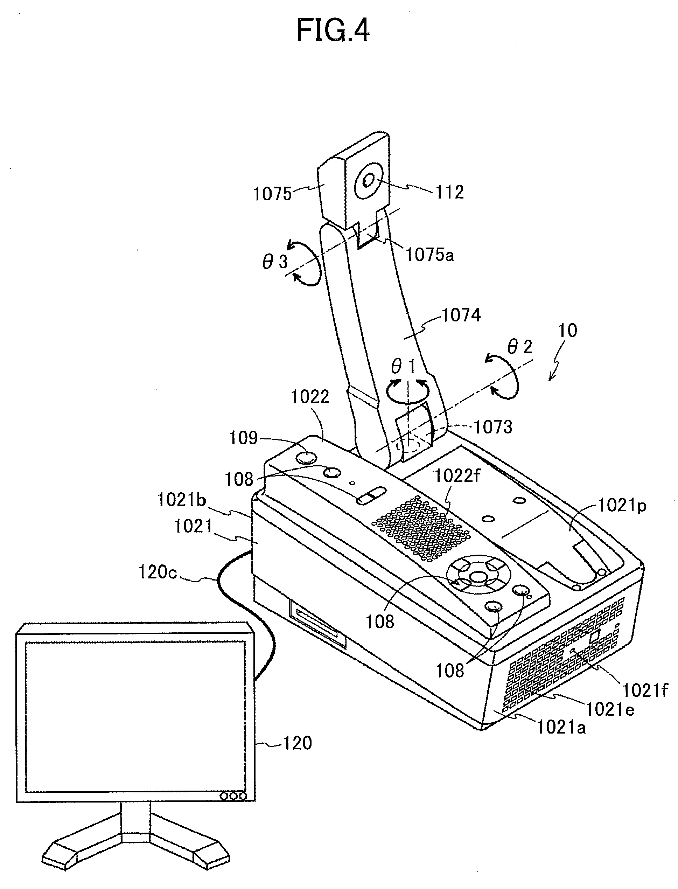

FIG. 4 is an external view of the terminal 10 according to the first embodiment of the present invention. As illustrated in FIG. 4, the terminal 10 includes a housing case 1021, an arm 1074, and a camera housing 1075. In substantially the entire area of a front side wall 1021a of the housing case 1021, a plurality of suction holes 1021e are formed. In substantially the entire area of a back side wall 1021b of the housing case 1021, a plurality of exhaust holes (not illustrated) are formed. Accordingly, as a cooling fan built in the housing case 1021 is driven, the outside air in front of the terminal 10 is taken in via the suction holes 1021e, and the air that has been taken in can be exhausted behind the terminal 10 via the exhaust holes. In a center part of the front side wall 1021a, sound collection holes 1021f are formed, and sound such as voices, sounds, and noise can be collected by a built-in microphone 114 described below.

On the left side of the housing case 1021 as viewed from the front, an operation panel 1022 is formed. The operation panel 1022 includes operation buttons 108 described below and a power switch 109 described below. Furthermore, a plurality of voice sound output holes 1022f are formed on the operation panel 1022 through which sound from a built-in speaker 115 is output. Furthermore, on the right side of the housing case 1021 as viewed from the front, an accommodating unit 1021p that is a recessed portion is formed for accommodating the arm 1074 and the camera housing 1075.

The arm 1074 is attached to the housing case 1021 via a torque hinge 1073. The arm 1074 is rotatable from right to left or up and down with respect to the housing case 1021, within a range of a pan angle θ1 of ±180 degrees assuming that the state where the arm 1074 is facing the front is zero degrees, and within a range of a tilt angle θ2 of 90 degrees (such that a click feeling is generated when the arm 1074 is tilted by approximately 45 degrees).

The camera housing 1075 includes a built-in camera 112 described below, for capturing images of a user or a room, etc. Furthermore, a torque hinge 1075a is formed in the camera housing 1075. The camera housing 1075 is attached to the arm 1074 via the torque hinge 1075a. Assuming that a state where the camera housing 1075 is linearly disposed with respect to the arm 1074 is zero degrees, the camera housing 1075 is rotatable within a range of a tilt angle θ3 of approximately 100 degrees toward the front side of the terminal 10 approximately 90 degrees toward the back side of the terminal 10.

Note that the relay device 30, the management system 50, and the program providing system 90 respectively have the same exterior view as a general-purpose server computer, and therefore descriptions of the exterior view of the relay device 30, the management system 50, and the program providing system 90 are omitted.

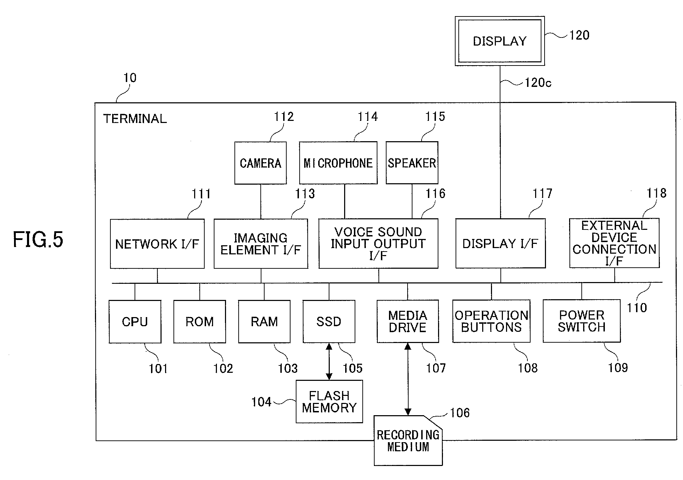

FIG. 5 is a block diagram illustrating a hardware configuration of the terminal 10 according to the first embodiment of the present invention. As illustrated in FIG. 5, the terminal 10 according to the present embodiment includes a Central Processing Unit (CPU) 101 for controlling operations of the entire terminal 10. Furthermore, the terminal 10 includes a Read-Only Memory (ROM) 102 storing programs used for driving the CPU 101 such as an Initial Program Loader (IPL), etc., and a Random Access Memory (RAM) 103 used as a work area of the CPU 101. Furthermore, the terminal 10 includes a flash memory 104 storing various kinds of data such as a terminal-use program, image data, and voice sound data, etc. Furthermore, the terminal 10 includes a Solid State Drive (SSD) 105 for controlling the reading or the writing of various kinds of data with respect to the flash memory 104, under the control of the CPU 101. Furthermore, the terminal 10 includes a media drive 107 for controlling the reading or the writing (storing) of data with respect to a recording medium 106 such as a flash memory, etc., and operation buttons 108 that are operated when selecting a destination of the terminal 10. Furthermore, the terminal 10 includes a power switch 109 for switching ON/OFF the power source of the terminal 10, and a network interface (I/F) 111 for performing data transmission by using the communication network 2.

Furthermore, the terminal 10 includes the built-in camera 112 for capturing an image of a subject and obtaining image data under the control of the CPU 101, an imaging element I/F 113 for controlling the driving of the camera 112, and the built-in microphone 114 for inputting voice sound. Furthermore, the terminal 10 includes the built-in speaker 115 for outputting voice sound, and a voice sound input output I/F 116 for processing the input and output of voice sound signals between the microphone 114 and the speaker 115 under the control of the CPU 101. Furthermore, the terminal 10 includes a display I/F 117 for transmitting image data to an external display 120 under the control of the CPU 101 and an external device connection I/F 118 for connecting various external devices. Furthermore, the terminal 10 includes a bus line 110 such as an address bus and a data bus, etc., for electrically connecting the above elements as illustrated in FIG. 5.

The display 120 is a display device including a liquid crystal display or an organic electro-luminescence (EL) display for displaying an image of a subject and icons used for operation, etc. Furthermore, the display 120 is connected to the display I/F 117 via a cable 120c. The cable 120c may be a cable for analog Red/Green/Blue (RGB) (Video Graphics Array (VGA)) signals, a cable for a component video, or a cable for High-Definition Multimedia Interface (HDMI) (registered trademark) or Digital Video Interactive (DVI) signals.

The camera 112 includes lenses and an individual imaging element for converting light into electric changes and computerizing an image (video) of a subject. As the individual imaging element, a Complementary Metal Oxide Semiconductor (CMOS) and a Charge Coupled Device (CCD), etc., may be used.

To the external device connection I/F 118, external devices such as an external camera, an external microphone, and an external speaker, etc., can be connected by a Universal Serial Bus (USB) cable, etc. When the external camera is connected, the external camera is driven with priority over the built-in camera 112 under the control of the CPU 101. Similarly, when an external microphone is connected or when an external speaker is connected, the external microphone and the external speaker are respectively driven with priority over the built-in microphone 114 and the built-in speaker 115 under the control of the CPU 101.

Note that the recording medium 106 is detachably attached to the terminal 10. Furthermore, the memory is not limited to the flash memory 104 as long as a non-volatile memory that reads or writes data under the control of the CPU 101 is used, such as Electrically Erasable and Programmable ROM (EEPROM), etc.

Furthermore, the terminal-use program may be recorded in and distributed by a computer-readable recording medium such as the recording medium 106 in a file having an installable format or an executable format. Furthermore, the terminal-use program may be stored in the ROM 102 instead of the flash memory 104.

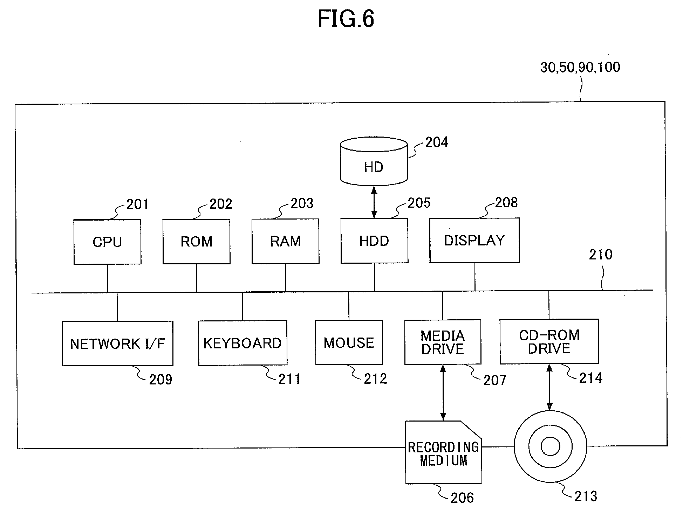

FIG. 6 is a block diagram illustrating a hardware configuration of the management system 50 according to the first embodiment of the present invention. The management system 50 includes a CPU 201 for controlling the operations of the entire management system 50, a ROM 202 storing programs used for driving the CPU 201 such as an IPL, and a RAM 203 used as a work area of the CPU 201. Furthermore, the management system 50 includes the HD 204 for storing various kinds of data such as a transmission management-use program, etc., and a Hard Disk Drive (HDD) 205 for controlling the reading or the writing of various kinds of data with respect to the HD 204 under the control of the CPU 201. Furthermore, the management system 50 includes a media drive 207 for controlling the reading or the writing (storing) of data with respect to a recording medium 206 such as a flash memory, etc., and a display 208 for displaying various kinds of information such as a cursor, a menu, a window, characters, or images. Furthermore, the management system 50 includes a network I/F 209 for performing data transmission by using the communication network 2, a keyboard 211 including a plurality of keys for inputting characters, values, and various instructions, and a mouse 212 for selecting and executing various instructions, selecting a processing target, and moving the cursor. Furthermore, the management system 50 includes a Compact Disc Read-Only Memory (CD-ROM) drive 214 for controlling the reading or the writing of various kinds of data with respect to a CD-ROM 213 that is an example of a removable recording medium. Furthermore, the management system 50 includes a bus line 210 such as an address bus and a data bus, etc., for electrically connecting the above elements as illustrated in FIG. 6.

Furthermore, the transmission management-use program may be recorded in and distributed by a computer-readable recording medium such as the recording medium 206 or the CD-ROM 213 in a file having an installable format or an executable format. Furthermore, the transmission management -use program may be stored in the ROM 202 instead of the HD 204.

Furthermore, the hardware configuration of the relay device 30 is the same as the hardware configuration of the management system 50 described above, and is thus not described. However, the HD 204 records a relay device-use program for controlling the relay device 30. In this case also, the relay device-use program may be recorded in and distributed by a computer-readable recording medium such as the recording medium 206 or the CD-ROM 213 in a file having an installable format or an executable format. Furthermore, the relay device-use program may be stored in the ROM 202 instead of the HD 204.

Furthermore, the hardware configuration of the program providing system 90 and the terminal 10 is the same as the hardware configuration of the management system 50 described above, and is thus not described. However, the HD 204 records a program providing-use program for controlling the program providing system 90. In this case also, the program providing-use program may be recorded in and distributed by a computer-readable recording medium such as the recording medium 206 or the CD-ROM 213 in a file having an installable format or an executable format. Furthermore, the program providing-use program may be stored in the ROM 202 instead of the HD 204.

Note that as other examples of the removable recording medium, the program may be recorded in and provided by a computer-readable recording medium such as a Compact Disc Recordable (CD-R), a Digital Versatile Disk (DVD), and a Blu-ray disk, etc.

### «Functional configuration of embodiment»

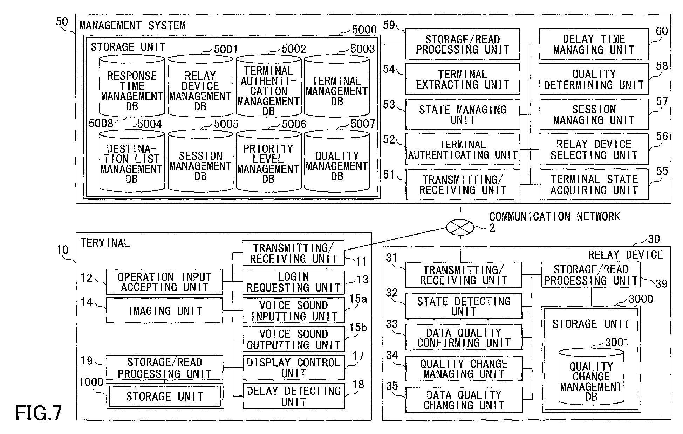

Next, a functional configuration of the present embodiment is described. FIG. 7 is a functional block diagram of the terminal 10, the relay device 30, and the management system 50 included in the transmission system 1 according to the first embodiment of the present invention. In FIG. 7, the terminal 10, the relay device 30, and the management system 50 are data-communicatively connected to each other via the communication network 2. Furthermore, the program providing system 90 illustrated in FIG. 1 is not directly related to communication in the TV conference, and is thus omitted from FIG. 7.

### <Functional configuration of terminal>

The terminal 10 includes a transmitting/receiving unit 11, an operation input accepting unit 12, a login requesting unit 13, an imaging unit 14, a voice sound inputting unit 15a, a voice sound outputting unit 15b, a display control unit 17, a delay detecting unit 18, and a storage/read processing unit 19. These units are functions or functioning means that are realized as any of the elements illustrated in FIG. 5 operates in response to an instruction from the CPU 101 according to a terminal-use program loaded in the RAM 103 from the flash memory 104. Furthermore, the terminal 10 includes a storage unit 1000 that is constructed by the RAM 103 and the flash memory 104 illustrated in FIG. 5.

### (Functions of terminal)

Next, referring to FIGS. 5 and 7, a detailed description is given of the functions of the terminal 10. Note that in the following, in order to describe the functions of the terminal 10, a description is given of a relationship between the functions of the terminal 10 and the main elements among the elements illustrated in FIG. 5 for realizing the functions of the terminal 10.

The transmitting/receiving unit 11 of the terminal 10 illustrated in FIG. 7 is realized by instructions from the CPU 101 and the network I/F 111 illustrated in FIG. 5. The transmitting/receiving unit 11 sends and receives various kinds of data (or information) with other terminals, devices, and systems via the communication network 2. The transmitting/receiving unit 11 starts receiving various kinds of state information indicating the state of the terminals that are destination candidates from the management system 50, before starting a call with the desired destination terminal. Note that the state information does not only indicate the operating state of each terminal 10 (an online state or an offline state), but also indicates detailed states such as whether the terminal 10 is online and is also in a state of being able to make a call, the terminal 10 is making a call, or the user is away from the terminal 10, etc. Furthermore, the state information does not only indicate the operating state of each terminal 10, but also indicates various states such as the cable 120c is removed from the terminal 10, voice sound is output but images cannot be output, and voice sound cannot be output (MUTE), etc. In the example described below, the state information indicates the operating state.

The operation input accepting unit 12 is realized by instructions from the CPU 101, the operation buttons 108, and the power switch 109 illustrated in FIG. 5. The operation input accepting unit 12 accepts various kinds of input by the user. For example, when the user switches the power switch 109 illustrated in FIG. 5 to a power-on state, the operation input accepting unit 12 illustrated in FIG. 7 accepts the instruction for power-on and turns on the power.

The login requesting unit 13 is realized by instructions from the CPU 101 illustrated in FIG. 5. The login requesting unit 13 is triggered by the acceptance of the power being turned on, to automatically send login request information indicating a request to log in and the IP address of the request source terminal at the present time point, from the transmitting/receiving unit 11 to the management system 50 via the communication network 2. Furthermore, when the user turns the power switch 109 off from the on state, the transmitting/receiving unit 11 sends state information indicating to turn off the power to the management system 50, and then the operation input accepting unit 12 completely turns off the power. Accordingly, the management system 50 is able to recognize that the terminal 10 has switched to power off from power on.

The imaging unit 14 is realized by instructions from the CPU 101, the camera 112, and the imaging element I/F 113 illustrated in FIG. 5. The imaging unit 14 captures an image of a subject, and outputs image data obtained by capturing the image.

The voice sound inputting unit 15a is realized by instructions from the CPU 101 and the voice sound input output I/F 116 illustrated in FIG. 5. After the user's voice sound is converted into voice sound signals by the microphone 114, the voice sound inputting unit 15a inputs voice sound data relevant to the voice sound signals. The voice sound outputting unit 15b is realized by instructions from the CPU 101 and the voice sound input output I/F 116 illustrated in FIG. 5. The voice sound outputting unit 15b outputs voice sound signals relevant to voice sound data to the speaker 115, and causes the speaker 115 to output voice sound.

The display control unit 17 is realized by instructions from the CPU 101 and the display I/F 117 illustrated in FIG. 5. As described below, the display control unit 17 implements control to combine received image data items having different resolutions and to send the combined image data items to the display 120. Furthermore, the display control unit 17 may send information of a destination list received from the management system 50 to the display 120, and cause the display 120 to display the destination list.

The delay detecting unit 18 is realized by instructions from the CPU 101 illustrated in FIG. 5. The delay detecting unit 18 detects the delay time (milliseconds (ms)) of image data or voice sound data sent from other terminals 10 via the relay device 30.

The storage/read processing unit 19 is executed by instructions from the CPU 101 and the SSD 105 illustrated in FIG. 5, or realized by instructions from the CPU 101. The storage/read processing unit 19 stores various kinds of data in the storage unit 1000 and performs processes of reading various kinds of data stored in the storage unit 1000. The storage unit 1000 stores a terminal identification (ID) for identifying the terminal 10 and passwords, etc. Furthermore, in the storage unit 1000, the image data and voice sound that are received when making a call with a destination terminal are stored and overwritten in the storage unit 1000 every time the data is received. The image data before being overwritten is used to display an image on the display 120, and the voice sound data before being overwritten is used to output voice sound data from the speaker 150.

Note that the terminal ID and a relay device ID described below indicate identification information such as a language, a character, a symbol, or various marks, etc., used for uniquely identifying the terminal 10 and the relay device 30, respectively. Furthermore, the terminal ID and a relay device ID may be identification information including a combination of at least two of a language, a character, a symbol, and various marks.

### <Functional configuration of relay device>

The relay device 30 includes a transmitting/receiving unit 31, a state detecting unit 32, a data quality confirming unit 33, a quality change managing unit 34, a data quality changing unit 35, and a storage/read processing unit 39. These units are functions or functioning means that are realized as any of the elements illustrated in FIG. 6 operates in response to an instruction from the CPU 301 according to a relay device-use program loaded in the RAM 203 from the HD 204. Furthermore, the relay device 30 includes a storage unit 3000 that is constructed by the RAM 203 and/or the HD 204 illustrated in FIG. 6.

### (Quality change management table)

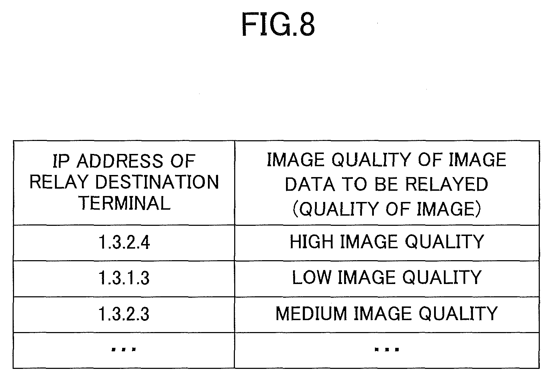

In the storage unit 3000, a quality change management database (DB) 3001 including a quality change management table as illustrated in FIG. 8, is constructed. In the quality change management table, the IP address of the terminal 10 that is the relay destination (destination) of the image data, and the image quality of the image data to be relayed by the relay device 30 to the relay destination, are managed in association with each other.

### (Functions of relay device)

Next, a detailed description is given of the functions of the relay device 30. Note that in the following, in order to describe the functions of the relay device 30, a description is given of a relationship between the functions of the relay device 30 and the main elements among the elements illustrated in FIG. 6 for realizing the functions of the relay device 30.

The transmitting/receiving unit 31 of the relay device 30 illustrated in FIG. 7 is realized by instructions from the CPU 201 and the network I/F 209 illustrated in FIG. 6. The transmitting/receiving unit 31 sends and receives various kinds of data (or information) with other terminals, devices, and systems via the communication network 2.

Note that the transmitting/receiving unit 31 may wait for a predetermined time before sending a response to a request from the management system 50, according to the CPU usage rate of the relay device 30, the number of sessions connected at the same time, and the usage status of resources in the relay device 30. Accordingly, the transmitting/receiving unit 31 is able to send, to the management system 50, a report indicating the congestion of the relay device 30 that is the own device, such that the relay device 30 will not be selected by the response time selecting unit 56c of the management system 50.

The state detecting unit 32 is realized by instructions from the CPU 201 illustrated in FIG. 6. The state detecting unit 32 detects the operating state of the relay device 30 that is the own device. As the operating state, there are states including "online", "offline", "during call", and "temporarily interrupted", etc.

The data quality confirming unit 33 is realized by instructions from the CPU 201 illustrated in FIG. 6. The data quality confirming unit 33 uses the IP address of the destination terminal as a search key to search the quality change management DB 3001 (see FIG. 8), and extracts the image quality of the corresponding image data that is to be relayed, to confirm the image quality of the image data to be relayed.

The quality change managing unit 34 is realized by instructions from the CPU 201 illustrated in FIG. 6. The quality change managing unit 34 changes the content of the quality change management DB 3001 based on quality information described below sent from the management system 50. For example, it is assumed that high-quality image data is being sent and received between a request source terminal (terminal 10aa) having a terminal ID of "01aa" and a destination terminal (terminal 10db) having a terminal ID of "01db", to hold a TV conference. During this TV conference, a request source terminal (terminal 10bb) and a destination terminal (terminal 10ca) start another TV conference via the communication network 2. Due to this other TV conference, a delay occurs in the reception of image data at the destination terminal (terminal 10db). In this case, the relay device 30 decreases the image quality of the image data being relayed up to the present time, from high quality to medium quality. In this case, the content of the quality change management DB 3001 is changed such that the image quality of the image data relayed by the relay device 30 is decreased from high quality to medium quality, based on the quality information indicating medium quality.

The data quality changing unit 35 is realized by instructions from the CPU 201 illustrated in FIG. 6. The data quality changing unit 35 changes the image quality of the image data sent from a transmission source terminal based on the content of the quality change management DB 3001 that has been changed as described above.

The storage/read processing unit 39 is realized by instructions from the CPU 201 and the HDD 205 illustrated in FIG. 6. The storage/read processing unit 39 performs processes of storing various kinds of data in the storage unit 3000 and reading various kinds of data stored in the storage unit 3000.

### <Functional configuration of management system>

The transmission management system 50 includes a transmitting/receiving unit 51, a terminal authenticating unit 52, a state managing unit 53, a terminal extracting unit 54, a terminal state acquiring unit 55, a relay device selecting unit 56, a session managing unit 57, a quality determining unit 58, a storage/read processing unit 59, and a delay time managing unit 60. These units are functions or functioning means that are realized as any of the elements illustrated in FIG. 6 operates in response to an instruction from the CPU 201 according to a management system-use program loaded in the RAM 203 from the HD 204. Furthermore, the management system 50 includes a storage unit 5000 that is constructed by the HD 204 illustrated in FIG. 6.

### (Relay device management table)

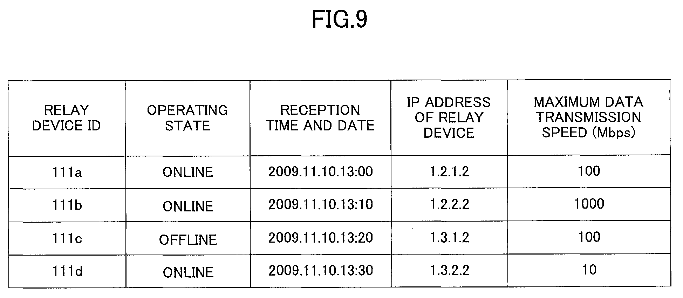

In the storage unit 5000, a relay device management DB 5001 including a relay device management table as illustrated in FIG. 9 is constructed. In the relay device management table, the operating state of each relay device 30, the reception time and date at which the state information indicating the operating state is received at the management system 50, the IP address of the relay device 30, and the maximum data transmission speed (megabits per second (Mbps)) at the relay device 30 are managed in association with each other for each relay device ID of each relay device 30. For example, the relay device management table illustrated in FIG. 9 indicates that with respect to the relay device 30a having a relay device ID of "111a", the operating state is "online", the time and date at which the state information is received at the management system 50 is "November 10, 2009, 13:00", the IP address of this relay device 30a is "1.2.1.2", and the maximum data transmission speed at this relay device 30a is 100 Mbps.

### (Terminal authentication management table)

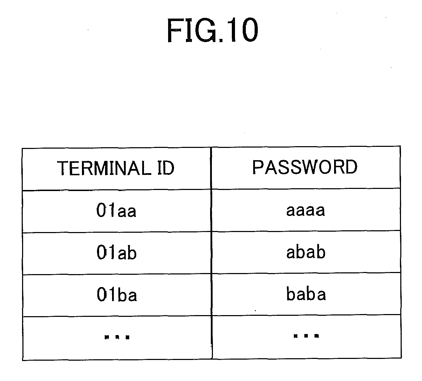

Furthermore, in the storage unit 5000, a terminal authentication management DB 5002 including a terminal authentication management table as illustrated in FIG. 10 is constructed. In the terminal authentication management table, the respective passwords are managed in association with the respective terminal IDs of all terminals 10 managed by the management system 50. For example, the terminal authentication management table illustrated in FIG. 10 indicates that the terminal 10aa has a terminal ID of "01aa" and a password of "aaaa".

### (Terminal management table)

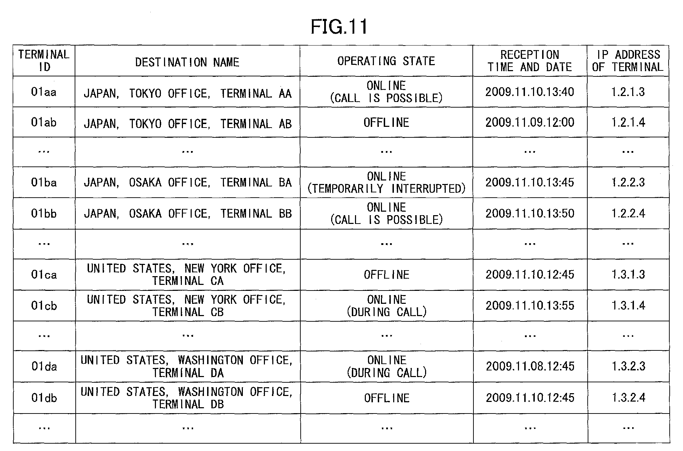

Furthermore, in the storage unit 5000, a terminal management DB 5003 including a terminal management table as illustrated in FIG. 11 is constructed. In the terminal management table, a destination name in the case the terminal 10 is a destination, the operating state of each terminal 10, the reception time and date at which the login request information described below is received at the management system 50, and the IP address of the terminal 10 are managed in association with each other for each terminal ID of each terminal 10. For example, the terminal management table illustrated in FIG. 11 indicates that with respect to the terminal 10aa having the terminal ID "01aa", the terminal name is "Japan, Tokyo office, terminal AA", the operating state is "online (call is possible)", the time and date at which the login request information is received at the management system 50 is "November 10, 2009, 13:40", and the IP address of this terminal 10aa is "1.2.1.3".

### (Destination list management table)

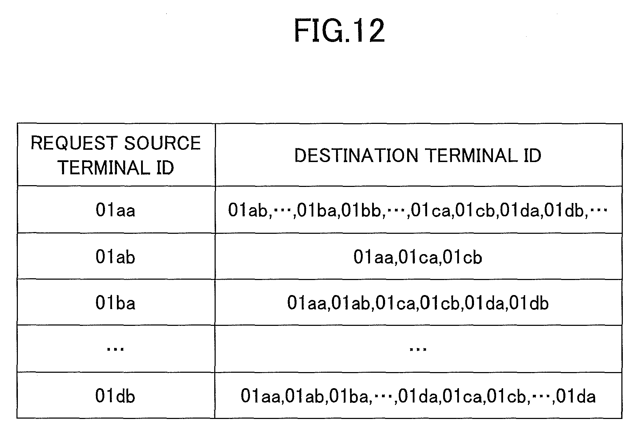

Furthermore, in the storage unit 5000, a destination list management DB 5004 including a destination list management table as illustrated in FIG. 12 is constructed. In the destination list management table, all of the terminal IDs of destination terminals registered as candidate destination terminals are managed in association with the terminal ID of the request source terminal requesting to start a call in a TV conference. For example, the destination list management table illustrated in FIG. 12 indicates that the candidate destination terminals, which are terminals to which the request source terminal (terminal 10aa) having a terminal ID "01aa" is able to make a request to start a call in a TV conference, are the terminal 10ab having a terminal ID "01ab", the terminal 10ba having a terminal ID "01ba", and the terminal 10bb having a terminal ID "01bb". The candidate destination terminals are updated by addition or deletion, according to an addition request or a deletion request made by any of the request source terminals to the management system 50.

### (Session management table)

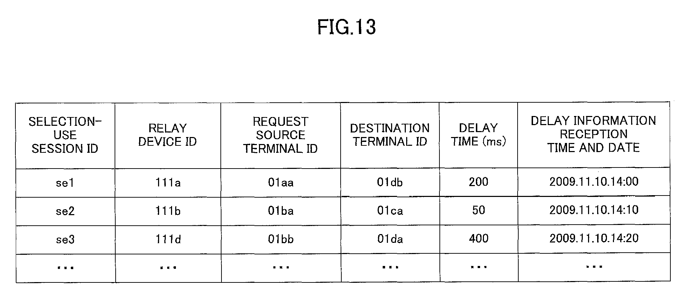

Furthermore, in the storage unit 5000, a session management DB 5005 including a session management table as illustrated in FIG. 13 is constructed. In the session management table, a relay device ID of the relay device 30 used for relaying the image data and the voice sound data, the terminal ID of the request source terminal, the terminal ID of the destination terminal, the delay time (milliseconds (ms)) of reception when the image data is received at the destination terminal, and the reception time and date when the delay information indicating the delay time is sent from the destination terminal and received at the management system 50 are managed in association with each other for each session ID. For example, the session management table illustrated in FIG. 13 indicates that the relay device 30a (relay device ID "111a") selected in a session executed with the use of a session ID "se1" is relaying image data and voice sound data between the request source terminal (terminal 10aa) having a terminal ID "01aa" and the destination terminal (terminal 10db) having a terminal ID "01db", and that the delay time of image data at a time point "November 10, 2009, 14:00" at the destination terminal (terminal 10db) is 200 (ms). Note that when a TV conference is performed between two terminals 10, the reception time and date of the delay information may be managed based on the delay information sent from the request source terminal instead of from the destination terminal. However, when a TV conference is held among three or more terminals 10, the reception time and date of the delay information is managed based on the delay information sent from the terminal 10 that is the receiving side receiving the image data and voice sound data.

### (Address priority level management table)

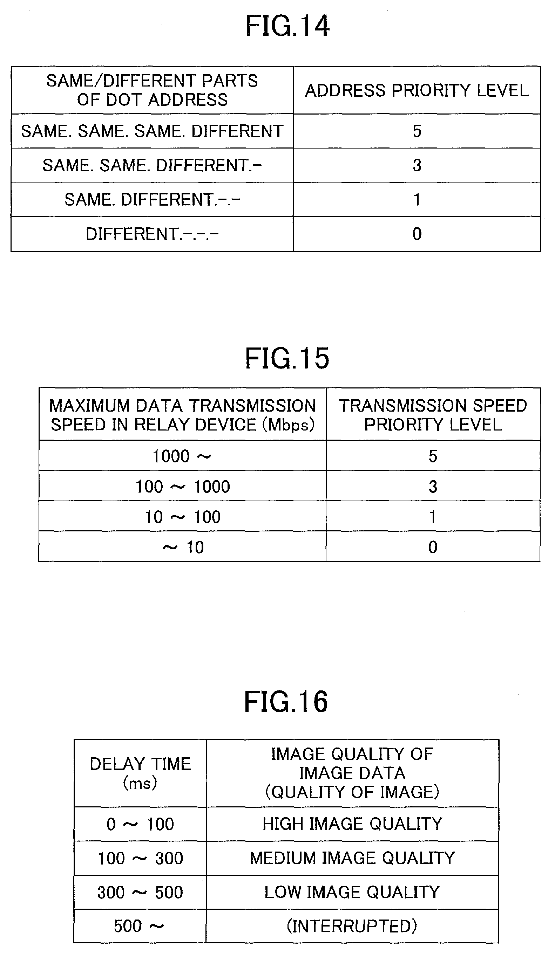

Furthermore, in the storage unit 5000, a priority level management DB 5006 including an address priority level management table as illustrated in FIG. 14 is constructed. In the address priority level management table, indications as to whether the four dot addresses included in an IP address of general IPv4 are the "same" or "different", between any one of the terminals 10 and any one of the relay devices 30, are managed in association with the address priority level. The more the indications of "same" dot addresses, the higher the point of the address priority level. "Same" expresses that the dot address is the same, and "different" expresses that the dot address is different. For example, in the address priority level management table illustrated in FIG. 14, when the values of the top three dot addresses in IP address are indicated as being the same, the point of the address priority level is "5". When the values of the top two dot addresses in IP address are indicated as being the same, the point of the address priority level is "3". In this case, as to whether the value of the last dot address is the same or different is unrelated to the priority level. When the value of the topmost dot address is the same and the value of the second dot address from the top is different in the IP address, the point of the address priority level is "1". In this case, as to whether the value of the third dot address from the top and the value of the last dot address are the same or different, is unrelated to the priority level. When the value of the topmost dot address in the IP address is different, the point of the address priority level is "0". In this case, as to whether the values of the second and third dot address from the top and the value of the last dot address are the same or different, is unrelated to the priority level.

### (Transmission speed priority level management table)

Furthermore, in the priority level management DB 5006 constructed the storage unit 5000, a transmission speed priority level management table as illustrated in FIG. 15 is also included. In the transmission speed priority level management table, the maximum data transmission speed and the transmission speed priority level are managed in association with each other, such that the higher the value of the maximum data transmission speed (Mbps) at the relay device 30, the higher the point of the transmission speed priority level. For example, in the transmission speed priority level management table illustrated in FIG. 15, when the maximum data transmission speed at the relay device 30 is higher than or equal to 1000 Mbps, the point of the transmission speed priority level is "5". When the maximum data transmission speed at the relay device 30 is higher than or equal to 100 Mbps and less than 1000 Mbps, the point of the transmission speed priority level is "3". When the maximum data transmission speed at the relay device 30 is higher than or equal to 10 Mbps and less than 100 Mbps, the point of the transmission speed priority level is "1". When the maximum data transmission speed at the relay device 30 is less than 10 Mbps, the point of the transmission speed priority level is "0".

### (Quality management table)

Furthermore, in the storage unit 5000, a quality management DB 5007 including a quality management table as illustrated in FIG. 16 is constructed. In the quality management table, the delay time of the image data and the image quality (quality of image) of the image data are managed in association with each other, such that the longer the delay time (ms) of the image data at the request source terminal or the destination terminal, the lower the image quality of the image data relayed by the relay device 30.

### (Response time management table)

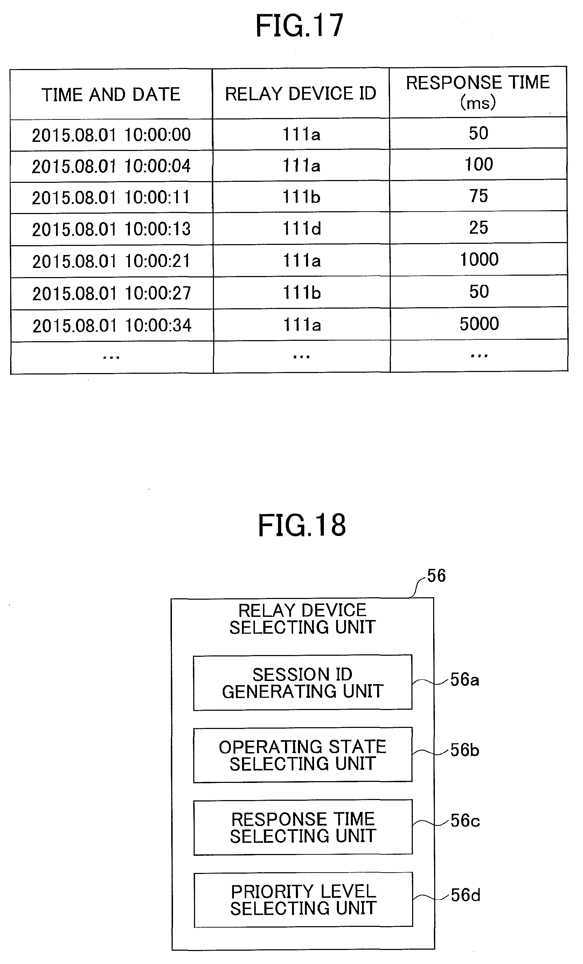

Furthermore, in the storage unit 5000, a response time management DB 5008 including a response time management table as illustrated in FIG. 17 is constructed. In the response time management table, the history of the response time of each relay device 30 is managed. For example, in the response time management table illustrated in FIG. 17, the time and date, the relay device ID, and the response time are managed in association with each other. The time and date is the time and date when the management system 50 has requested the relay device 30 to relay the communication of media between the terminals 10 (when a relay start request has been sent). The relay device ID is information for identifying the relay device 30. The response time is the time from when the management system 50 has requested the relay device 30 to relay the communication of media between the terminals 10 (when a relay start request has been sent) to when a response (for example, relay start permission) is received from the relay device 30.

### (Functions of management system)

Next, a detailed description is given of the functions of the management system 50. Note that in the following, in order to describe the functions of the management system 50, a description is given of a relationship between the functions of the management system 50 and the main elements among the elements illustrated in FIG. 6 for realizing the functions of the management system 50.

The transmitting/receiving unit 51 is executed by instructions from the CPU 201 and the network I/F 209 illustrated in FIG. 6. The transmitting/receiving unit 51 sends and receives various kinds of data (or information) with other terminals, devices, and systems via the communication network 2.

The terminal authenticating unit 52 is realized by instructions from the CPU 201 illustrated in FIG. 6. The terminal authenticating unit 52 uses, as search keys, the terminal ID and the password included in the login request information received via the transmitting/receiving unit 51, to search the terminal authentication management DB 5002 of the storage unit 5000, and determines whether the same terminal ID and password are managed in the terminal authentication management DB 5002, to authenticate the transmitting terminal 10.

The state managing unit 53 is realized by instructions from the CPU 201 illustrated in FIG. 6. The state managing unit 53 manages the operating state of a request source terminal that has made a login request. The state managing unit 53 manages the operating state by storing the terminal ID of the request source terminal, the operating state of the request source terminal, the reception time and date at which the login request information is received at the management system 50, and the IP address of the request source terminal in association with each other in the terminal management DB 5003 (see FIG. 11). Furthermore, the state managing unit 53 changes the operating state indicating online in the terminal management DB 5003 (see FIG. 11) to offline, based on the state information to turn off the power that is sent from the terminal 10 as the user changes the state of the power switch 109 of the terminal 10 from on to off.

The terminal extracting unit 54 is realized by instructions from the CPU 201 illustrated in FIG. 6. The terminal extracting unit 54 uses, as a search key, the terminal ID of the request source terminal that has made a login request, to search the destination list management DB 5004 (see FIG. 12), and reads the terminal ID of a candidate destination terminal that can make a call with the request source terminal, to extract the terminal ID. Furthermore, the terminal extracting unit 54 uses, as a search key, the terminal ID of the request source terminal that has made a login request, to search the destination list management DB 5004 (see FIG. 12), and extracts the terminal ID of another request source terminal, in which the terminal ID of the above request source terminal is registered as a candidate destination terminal.

The terminal state acquiring unit 55 is realized by instructions from the CPU 201 illustrated in FIG. 6. The terminal state acquiring unit 55 uses, as a search key, the terminal ID of the candidate destination terminal extracted by the terminal extracting unit 54, to search the terminal management DB 5003 (see FIG. 11) and read the operating state for each terminal ID extracted by the terminal extracting unit 54. Accordingly, the terminal state acquiring unit 55 is able to acquire the operating state of the candidate destination terminal that can make a call with the request source terminal that has made the login request. Furthermore, the terminal state acquiring unit 55 may use, as a search key, the terminal ID extracted by the terminal extracting unit 54, to search the terminal management DB 5003, and acquire the operating state of the request source terminal that has made the login request.

The relay device selecting unit 56 is realized by instructions from the CPU 201 illustrated in FIG. 6.

The relay device selecting unit 56 realizes a session ID generating unit 56a, an operating state selecting unit 56b, a response time selecting unit 56c, and a priority level selecting unit 56d as illustrated in FIG. 18, according to instructions from the CPU 201 as illustrated in FIG. 6.

The session ID generating unit 56a generates a session ID for identifying a session in which call data is communicated between terminals

The operating state selecting unit 56b selects the relay device 30 by selecting a relay device ID of the relay device 30 in which the operating state is "online", among the relay devices 30 managed in the relay device management DB 5001 (see FIG. 9).

The response time selecting unit 56c performs a relay device selection process based on the response time. Specifically, the relay device selection process includes selecting the relay device 30 to relay the communication of media between the terminals 10 based on the history of the response time of a plurality of relay devices 30 stored in the response time management table.

In the relay device selection process based on the response time, the response time selecting unit 56c selects, from among a plurality of relay devices 30, the relay device 30 for which the all of the response times within a predetermined time are less than or equal to a predetermined threshold, the average value of response times within a predetermined time is less than or equal to a predetermined threshold, or a plurality of the response times within a predetermined time are continuously less than or equal to a predetermined threshold.

In the relay device selection process based on the response time, when the response time selecting unit 56c is unable to select the relay device 30, the response time selecting unit 56c sends a report indicating that the relay device 30 cannot be selected or the congestion status according to the response time, to at least one of the request source terminal 10 and the destination terminal 10, or to all of the terminals 10 in a standby state.

The response time selecting unit 56c detects a relay device in which a response time within a predetermined time is not recorded. The detection is performed periodically or at predetermined timings such as when performing the relay device selection process based on the response time. Then, the response time selecting unit 56c sends a dummy relay start request (dummy request message) to the detected relay device 30 by using the transmitting/receiving unit 51. Accordingly, the response time with respect to the dummy request message is stored in the response time management table in association with the corresponding relay device 30. Therefore, even when the relay device 30 has stopped being extracted, the data of the response time within a predetermined time will be recorded with respect to the relay device 30 again.

Furthermore, when the response time selecting unit 56c causes the transmitting/receiving unit 51 to send a dummy request message, the response time selecting unit 56c causes the transmitting/receiving unit 51 to wait for a period corresponding to the previous response time of the detected relay device 30 before sending the dummy request message, and after the period has passed, the response time selecting unit 56c causes the transmitting/receiving unit 51 to send the dummy request message. For example, when the previous response time is longer than or equal to a predetermined threshold (for example, 10 seconds), the response time selecting unit 56c causes the transmitting/receiving unit 51 to wait for a predetermined period (for example, 5 seconds), and then causes the transmitting/receiving unit 51 to send the dummy request message after the predetermined period has passed. Accordingly, it is possible to refrain from frequently sending dummy request messages when the relay device 30 is busy (when the call process of a media session is high-load).

Note that a dummy request message may include information indicating that the request message is a dummy, or a non-existent terminal ID or session ID may be set as the item of the terminal ID or the session ID in the dummy request message, or blank data may be set in the dummy request message.

Note that details of the relay device selection process based on the response time are described below.

The priority level selecting unit 56d searches the terminal management DB 5003 (see FIG. 11) based on a terminal ID of a request source terminal and a terminal ID of a destination terminal included in start request information sent from the request source terminal, to extract the respective IP addresses of the corresponding terminals 10. The priority level selecting unit 56d searches the relay device management DB 5001 (see FIG. 9) based on the IP address of the request source terminal and the IP address of the destination terminal that have been extracted, to check whether the dot addresses in the IP addresses of the request source terminal and the destination terminal are the same as or different from the dot addresses in the IP address of the selected relay device 30.

The priority level selecting unit 56d refers to the priority level management DB 5006 (see FIG. 14) and determines the point of the address priority level for each relay device 30.

The priority level selecting unit 56d searches the priority level management DB 5006 (see FIG. 15) based on the maximum data transmission speed of each relay device 30 managed in the relay device management DB 5001 (see FIG. 9), to determine the point of the transmission speed priority level for each relay device 30 extracted by the response time selecting unit 56c.

The priority level selecting unit 56d selects the relay device 30 having the highest aggregate point among the extracted relay devices 30. The aggregate point is obtained by aggregating the higher point between the points of the address priority levels with respect to the terminals 10, and the point of the transmission speed priority level.

The session managing unit 57 is realized by instructions from the CPU 201 illustrated in FIG. 6. The session managing unit 57 stores and manages a session ID generated by the session ID generating unit 56a, a terminal ID of the request source terminal, and a terminal ID of the destination terminal in association with each other in the session management DB 5005 (see FIG. 13) in the storage unit 5000. Furthermore, the session managing unit 57 stores and manages a relay device ID of the selected relay device 30 for each session ID, in the session management DB 5005 (see FIG. 13).

The quality determining unit 58 uses the above delay time as a search key to search the quality management DB 5007 (see FIG. 16) and extracts the image quality of the corresponding image data, to determine the image quality of the image data to be relayed by the relay device 30.

The storage/read processing unit 59 is executed by instructions from the CPU 201 and the HDD 205 illustrated in FIG. 6. The storage/read processing unit 59 stores various kinds of data in the storage unit 5000 and reads various kinds of data stored in the storage unit 5000.

The delay time managing unit 60 is realized by instructions from the CPU 201 illustrated in FIG. 6. The delay time managing unit 60 uses, as a search key, the IP address of the above destination terminal to search the terminal management DB 5003 (see FIG. 11) and extract the corresponding terminal ID. Furthermore, the delay time managing unit 60 stores and manages the delay time indicated in the above delay information, in the field part of the delay time in a record including the extracted terminal ID, in the session management table in the session management DB 5005 (see FIG. 13).

### «Processes or operations of first embodiment»

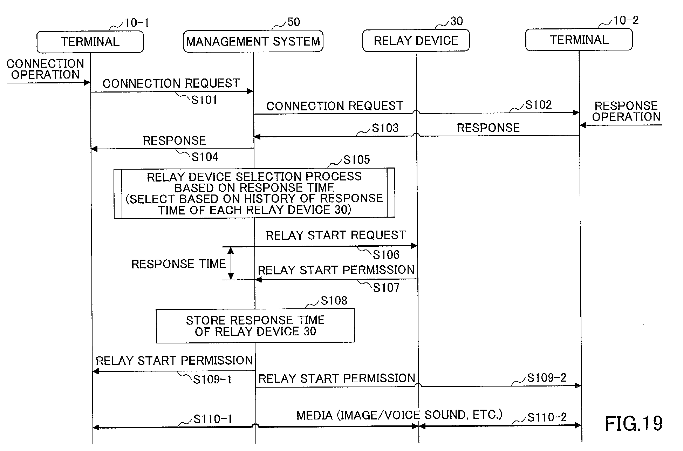

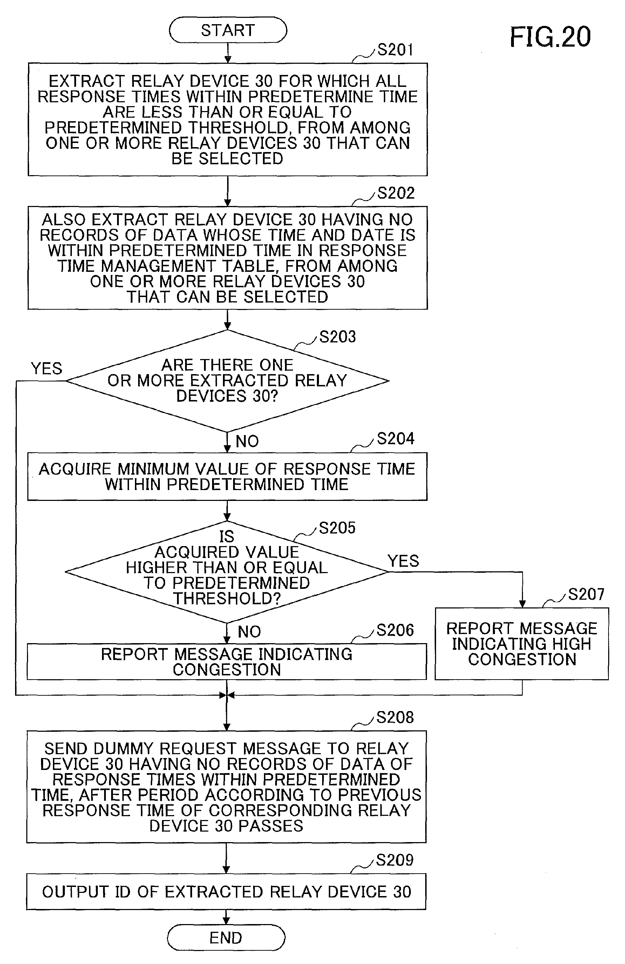

Next, referring to FIGS. 19 and 20, a description is given of a method of selecting a relay device in the transmission system 1 according to the first embodiment of the present invention.

First, referring to FIG. 19, a description is given of the overview of operations of the transmission system 1 according to the first embodiment. FIG. 19 is a sequence diagram of operations of connecting a session of communicating media between terminals according to the first embodiment of the present invention.

When the terminal 10-1 accepts an operation to connect to the terminal 10-2 from the user, the terminal 10-1 sends, to the management system 50, a request to connect to the terminal 10-2 (step S101).

The management system 50 transfers the connection request to the terminal 10-2 that is the destination (step S102).

The terminal 10-2 reports the reception of the request to the user of the terminal 10-2, accepts a response operation from the user of the terminal 10-2, and returns the response to the management system 50 (step S103).

The management system 50 transfers the response to the terminal 10-1 (step S104).

The management system 50 performs a relay device selection process based on the response time, and selects the relay device 30 to relay the media between the terminal 10-1 and the terminal 10-2, based on the history of the response time of each relay device 30 (step S105).

The management system 50 sends a relay start request to the relay device 30 (step S106).

The relay device 30 returns relay start permission to the management system 50 (step S107).

The management system 50 stores the response time, which is from when the relay start request is sent to when the relay start permission is received, in the response time management table, in association with the ID of the relay device 30 (step S108).

The management system 50 reports the relay start permission including the ID of the relay device 30 to the terminals 10-1 and 10-2 (steps S109-1 and S109-2).

The terminals 10-1 and 10-2 connect with the relay device 30, and transmit and receive media such as images and voice sound via the relay device 30 (steps S110-1 and S110-2).

Next, referring to FIG. 20, a description is given of a detailed example of the relay device selection process based on the response time in step S105 of FIG. 19, performed by the response time selecting unit 56c of the relay device selecting unit 56 of the management system 50. FIG. 20 is a flowchart of an example of the relay device selection process based on the response time according to the first embodiment of the present invention.

The response time selecting unit 56c of the relay device selecting unit 56 refers to the response time management table (see FIG. 17), and extracts the relay device 30 for which all response times within a predetermine time (for example, 1 minute) from the present time are less than or equal to a predetermined threshold (for example, 4 seconds), from among one or more relay devices 30 that can be selected (step S201).

The response time selecting unit 56c also extracts the relay device 30 for which there are no records of data of the relay device ID having a time and date within a predetermined time in the response time management table, from among the one or more relay devices 30 that can be selected (step S202). Therefore, even when the relay device 30 stops being extracted, after a predetermined time passes, there is no data of the response time recorded within a predetermined time, and therefore such a relay device 30 will be extracted again.

The response time selecting unit 56c determines whether there are one or more relay devices 30 extracted in the processes of steps S201 and S202 (step S203).

When there are one or more relay devices 30 extracted in the processes of steps S201 and S202 (YES in step S203), the process is ended.

When there are no relay devices 30 extracted in the processes of steps S201 and S202 (NO in step S203), the response time selecting unit 56c acquires the minimum value of the response time within the predetermined time, from among the response times of the one or more relay devices 30 that can be selected (step S204).

The response time selecting unit 56c determines whether the acquired value is higher than or equal to a predetermined threshold (step S205).

When the acquired value is higher than or equal to a predetermined threshold (YES in step S205), the response time selecting unit 56c sends a report indicating the congestion status to the request source terminal 10 and the destination terminal 10, by a message indicating high congestion, such as "it is very congested now, and therefore please try connecting again after waiting for a while" (step S207). Subsequently, the process proceeds to step S208 described below.

When the acquired value is not higher than or equal to a predetermined threshold (NO in step S205), the response time selecting unit 56c sends a report indicating the congestion status to the request source terminal 10 and the destination terminal 10, by a message indicating congestion, such as "it is congested now, and therefore please try connecting again after waiting for a short time" (step S206).

The response time selecting unit 56c causes the transmitting/receiving unit 51 to send a dummy request message to the relay device 30 having no records of data of response times within the predetermined time extracted in step S208, after waiting for a period according to the previous response time of the corresponding relay device 30 before sending the dummy request message (step S208).

The response time selecting unit 56c outputs the ID of the extracted relay device 30 (step S209).

In step S209, when there are a plurality of extracted relay devices 30, a single relay device 30 may be selected by any selection method. For example, the relay device 30 having the shortest response time may be selected, the relay device 30 may be selected based on a condition other than the response time, or information of the extracted plurality of relay devices 30 may be reported to the terminal 10 and the relay device 30 may be selected at the terminal 10.

Instead of the process of step S201, the response time selecting unit 56c may extract the relay device 30 for which the average value of response times within a predetermine time is less than or equal to a predetermined threshold, from among one or more relay devices 30 that can be selected.

Instead of the process of step S201, the response time selecting unit 56c may extract the relay device 30 for which a plurality of the response times within a predetermined time are continuously less than or equal to a predetermined threshold, from among one or more relay devices 30 that can be selected. Accordingly, for example, it is possible to prevent a situation of excluding the relay device 30 for which the response time has increased only once accidentally, if other response times for this relay device 30 are continuously less than or equal to a predetermined threshold.

The message in step S206 or S207 may not only be reported to the request source terminal 10 and the destination terminal 10, but may also be reported to all of the terminals 10 that are in a state of being able to send and receive messages (standby state) such as an online state. Accordingly, the report may be displayed on the screen of each terminal 10 to report the congestion to the user before accepting a connection operation from the user. In this case, when one or more relay devices 30 are extracted in the relay device selection process performed subsequently (YES in step S203), a message indicating that the congestion has been resolved may be reported to all of the terminals 10 to which the previous report has been sent.

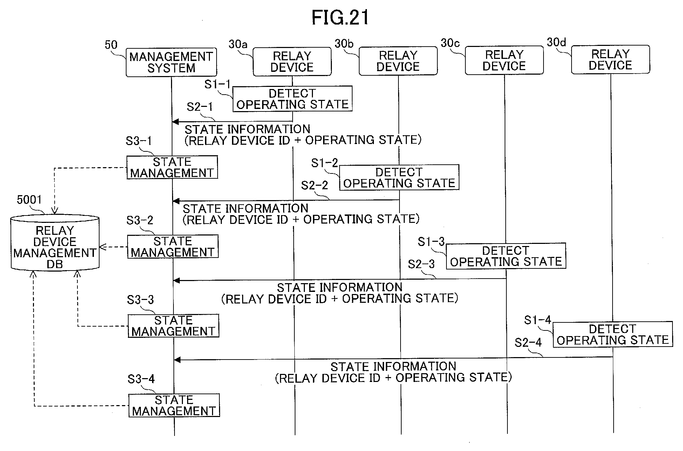

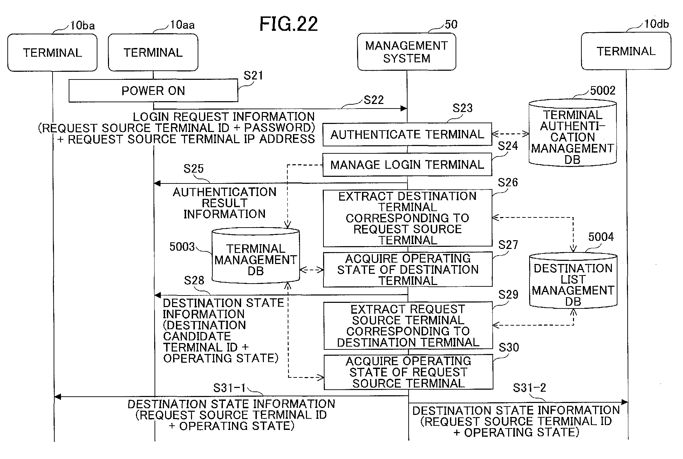

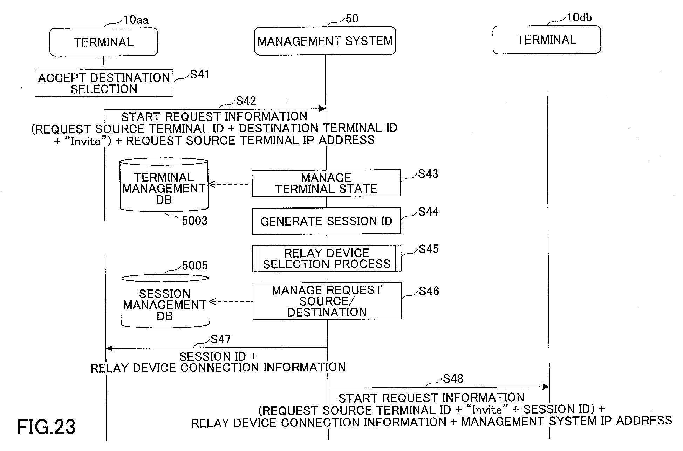

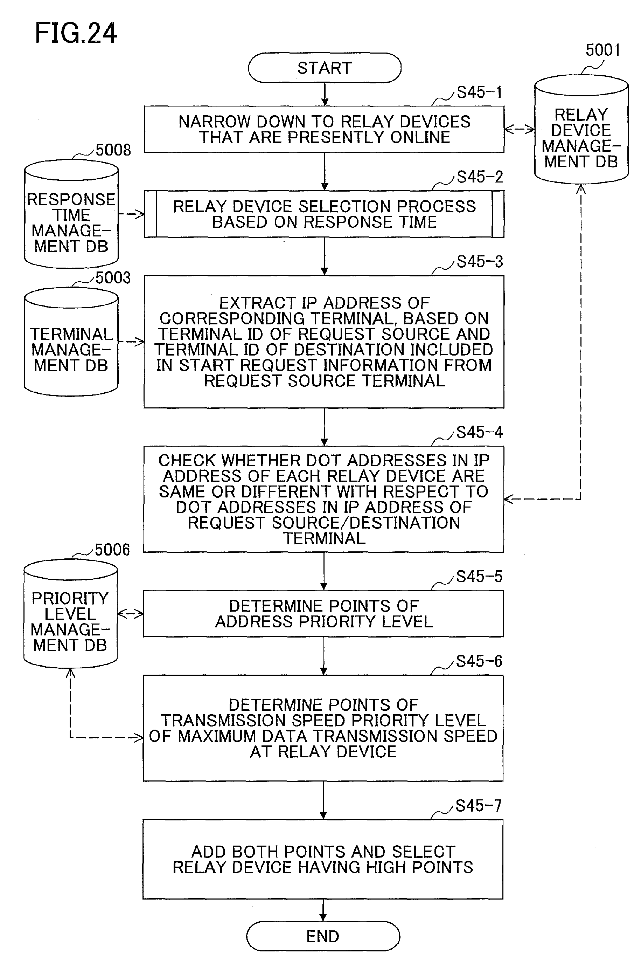

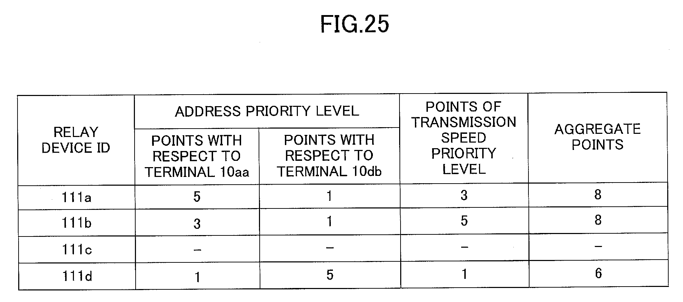

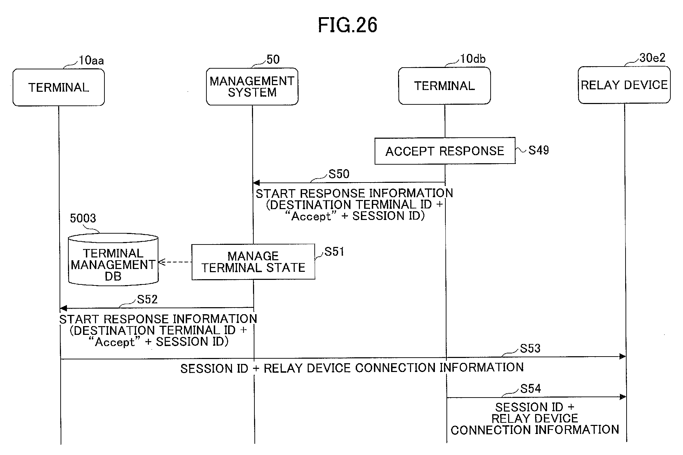

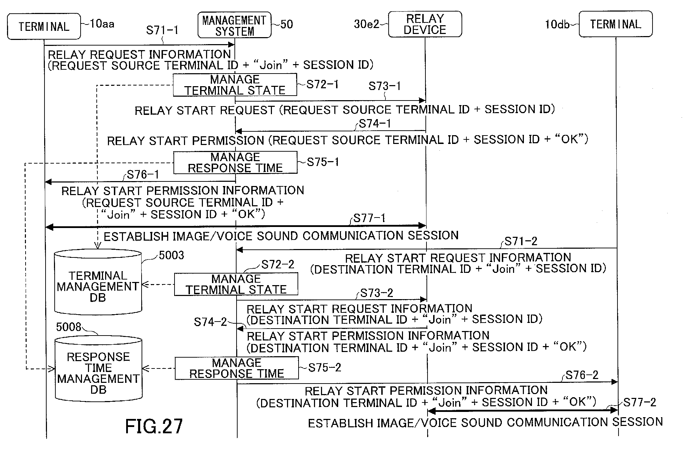

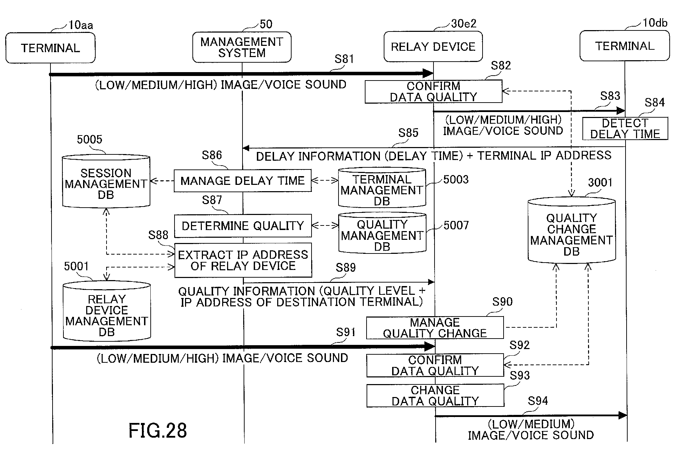

Next, referring to FIGS. 21 through 28, a description is given of examples of detailed processing methods performed by the transmission system 1 according to the first embodiment of the present invention. Note that FIG. 21 is a sequence diagram of a process of managing state information indicating the state of each relay device 30 sent to the management system 50 from each relay device 30 according to the first embodiment of the present invention. FIG. 22 is a sequence diagram of a process of the preparation stage of starting a call between a plurality of terminals 10 according to the first embodiment of the present invention. FIG. 23 is a sequence diagram of a process of requesting to start communication according to the first embodiment of the present invention. FIG. 24 is a flowchart of a process of narrowing down (selecting) the relay devices 30 according to the first embodiment of the present invention. FIG. 25 is a diagram illustrating a calculated state of points when performing the process of narrowing down the relay devices 30 according to the first embodiment of the present invention. FIG. 26 is a sequence diagram of a process of giving permission to a request to start communication according to the first embodiment of the present invention. FIG. 27 is a sequence diagram of a process of requesting to relay the call data according to the first embodiment of the present invention. FIG. 28 is a sequence diagram of a process of sending and receiving image data and voice sound data between transmission terminals according to the first embodiment of the present invention.

First, referring to FIG. 21, a description is given of process of managing the state information indicating the state of each relay device 30 sent to the management system 50 from each relay device 30. First, in each relay device 30, the state detecting unit 32 illustrated in FIG. 7 periodically detects the operating state of the relay device 30 that is the own device (steps S1-1 through S1-4). Then, the transmitting/receiving unit 31 of each relay device 30 periodically sends state information to the management system 50 via the communication network 2, such that the management system 50 can manage the operating state of each relay device 30 in a real-time manner (steps S2-1 through S2-4). The state information includes the relay device ID of each relay device 30 and the operating state detected by the state detecting unit 32 of the relay device 30 relevant to the corresponding relay device ID. Note that in the present embodiment, the relay devices 30a, 30b, and 30d are normally operating and "online". On the other hand, the relay device 30c is operating but is "offline" because some kind of failure has occurred in the program for executing the relay operation of the relay device 30c.

Next, in the management system 50, the transmitting/receiving unit 51 receives the state information sent from each relay device 30, and stores and manages the state information for each relay device ID in the relay device management DB 5001 (see FIG. 9) of the storage unit 5000 via the storage/read processing unit 59 (steps S3-1 through S3-4). Accordingly, in the relay device management table as illustrated in FIG. 9, the operating state indicating any one of "online", "offline", and "during failure" is stored and managed for each relay device ID. Furthermore, at this time, the reception time and date at which the state information has been received at the management system 50 is also stored and managed for each relay device ID. Note that when state information is not sent from the relay device 30, the field part of the operating state and the field part of the reception time and date in each record in the relay device management table illustrated in FIG. 9 are blank, or respectively include the operating state and the reception time and date when the state information has been received previously.

Next, referring to FIG. 22, a description is given of a transmission reception process of the management information in the preparation stage before starting a call between the terminal 10aa and the terminal 10db. Note that in FIG. 22, various kinds of management information are all sent and received by the management information session sei illustrated in FIG. 2.

First, when the user turns on the power switch 109 illustrated in FIG. 5, the operation input accepting unit 12 illustrated in FIG. 7 accepts the operation of the power on and turns on the power (step S21). Then, the login requesting unit 13 is triggered by the acceptance of the operation of power on to automatically send login request information indicating a login request from the transmitting/receiving unit 11 to the management system 50 via the communication network 2 (step S22). The login request information includes a terminal ID for identifying the terminal 10aa that is the request source terminal that is the own device, and a password. The terminal ID and the password are data that is read from the storage unit 1000 via the storage/read processing unit 19 and sent to the transmitting/receiving unit 11. Note that when the login request information is sent from the terminal 10aa to the management system 50, the management system 50 that is the receiving side is able to recognize the IP address of the terminal 10aa that is the sending side.

Next, the terminal authenticating unit 52 of the management system 50 uses, as search keys, the terminal ID and password included in the login request information received via the transmitting/receiving unit 51, to search the terminal authentication management DB 5002 (see FIG. 10) of the storage unit 5000, and determines whether the same terminal ID and password are managed in the terminal authentication management DB 5002, to authenticate the terminal (step S23). When the terminal authenticating unit 52 determines that the login request is from the terminal 10 having a valid usage authority because the same terminal ID and password are managed in the terminal authentication management DB 5002, the state managing unit 53 stores the terminal ID of the terminal 10aa, the operating state, the reception time and date when the above login request information has been received, and the IP address of the terminal 10aa, in association with each other, in the terminal management DB 5003 (see FIG. 11) (step S24). Accordingly, in the terminal management table illustrated in FIG. 11, the operating state "online", the reception time and date "2009.11.10.13:40", and the IP address "1.2.1.3" of the terminal 10aa, are managed in association with each other with respect to the terminal ID "01aa".

Then, the transmitting/receiving unit 51 of the management system 50 sends authentication result information indicating the authentication result obtained by the terminal authenticating unit 52, to the request source terminal (terminal 10aa) that has made the above login request via the communication network 2 (step S25). The following describes a case where the authentication has determined that the terminal 10 has a valid usage authority in the present embodiment.

The terminal extracting unit 54 of the management system 50 uses, as a search key, the terminal ID "01aa" of the request source terminal (terminal 10aa) that has made the login request, to search the destination list management DB 5004 (see FIG. 12), and reads and extracts a terminal ID of a candidate destination terminal that can communicate with the request source terminal (terminal 10aa) (step S26). Here, the respective terminal IDs ("01ab", "01ba", and "01db") of the destination terminals (terminals 10ab, 10ba, and 10db) corresponding to the terminal ID "01aa" of the request source terminal (terminal 10aa) are extracted.

Next, the terminal state acquiring unit 55 uses, as search keys the terminal IDs ("01ab", "01ba", and "01db") of the candidate destination terminals extracted by the terminal extracting unit 54, to search the terminal management DB 5003 (see FIG. 11), and reads the respective operating states ("offline", "online", and "online") of the terminal IDs extracted by the terminal extracting unit 54, to acquire the respective operating states of the terminals (10ab, 10ba, and 10db) (step S27).

Next, the transmitting/receiving unit 51 sends destination state information to the request source terminal (terminal 10aa) via the communication network 2. The destination state information sent by the transmitting/receiving unit 51 includes the terminal IDs ("01ab", "01ba", and "01db") used as search keys in step S27 and the respective operating states ("offline", "online", and "online") of the corresponding destination terminals (terminals 10ab, 10ba, and 10db) (step S28). Accordingly, the request source terminal (terminal 10aa) is able to recognize the respective operating states ("offline", "online", and "online") at the present time point of the terminals (10ab, 10ba, and 10db) that are the candidate destination terminals that can communicate with the request source terminal (terminal 10aa).

Furthermore, the terminal extracting unit 54 of the management system 50 uses, as a search key, the terminal ID "01aa" of the request source terminal (terminal 10aa) that has made the login request, to search the destination list management DB 5004 (see FIG. 12), and extract the terminal IDs of other request source terminals in which the terminal ID "01aa" of the request source terminal (terminal 10aa) is registered as a candidate destination terminal (step S29). In the destination list management table illustrated in FIG. 12, the extracted terminal IDs of other request source terminals are "01ab", "01ba", and "01db".

Next, the terminal state acquiring unit 55 of the management system 50 uses, as the search key, the terminal ID "01aa" of the request source terminal (terminal 10aa) that has made the login request, to search the terminal management DB 5003 (see FIG. 11), and acquire the operating state of the request source terminal (terminal 10aa) that has made the login request (step S30).

Then, the transmitting/receiving unit 51 sends destination state information including the terminal ID "01aa" of the request source terminal (terminal 10aa) and the operating state "online" acquired in step S30, to the terminals (10ba and 10db) whose operating states are "online" in the terminal management DB 5003 (see FIG. 11) among the terminals (10ab, 10ba, and 10db) relevant to the terminal IDs ("01ab", "01ba", and "01db") extracted in step S29 (steps S31-1 and S31-2). Note that when the transmitting/receiving unit 51 sends the destination state information to the terminals (10ba and 10db), the transmitting/receiving unit 51 refers to the IP addresses of terminals managed in the terminal management table illustrated in FIG. 11, based on the respective terminal IDs ("01ba" and "01db"). Accordingly, the transmitting/receiving unit 51 is able to report the terminal ID "01aa" of the request source terminal (terminal 10aa) that has made the login request and the operating state "online", to the other destination terminals (terminals 10db and 10ba) that can communicate with the request source terminal (terminal 10aa) that has made the login request as a destination.

On the other hand, also in the other terminals 10, similar to step S21 described above, when the user turns on the power switch 109 illustrated in FIG. 5, the operation input accepting unit 12 illustrated in FIG. 7 accepts the operation of the power on, and the same processes as steps S22 through S31-2 are performed, and therefore redundant descriptions are omitted.

Next, referring to FIG. 23, a description is given of a process of selecting the relay device 30 when start of communication is requested. Note that in FIG. 23, various kinds of management information items are all sent and received by the management information session sei illustrated in FIG. 2. Furthermore, in the present embodiment, the request source terminal (terminal 10aa) is able to make a call with at least one of the terminals (10ba and 10db) whose operating states are online in the state information of terminals received in step S28, among the candidate destination terminals 10. Thus, in the following, a description is given of a case where the user of the request source terminal (terminal 10aa) has selected to start a call with the destination terminal (terminal 10db).

First, when the user presses the operation buttons 108 illustrated in FIG. 5 to select the terminal 10db, the operation input accepting unit 12 illustrated in FIG. 7 accepts a request to start a call with the destination terminal (terminal 10db) (step S41). Then, the transmitting/receiving unit 11 of the request source terminal (terminal 10aa) sends start request information to the management system 50. The start request information includes the terminal ID "01aa" of the request source terminal (terminal 10aa) and the terminal ID "01db" of the destination terminal (terminal 10db), and indicates a request to start a call (step S42). Accordingly, the transmitting/receiving unit 51 of the management system 50 receives the start request information and is able to recognize the IP address "1.2.1.3" of the request source terminal (terminal 10aa) that is the transmission source.

Then, the state managing unit 53 changes the field part of the operating state in the records including the terminal ID "01aa" and terminal ID "01db" to "during call", in the terminal management table in the terminal management DB 5003 (see FIG. 11), based on the terminal ID "01aa" of the request source terminal (terminal 10aa) and the terminal ID "01db" of the destination terminal (terminal 10db) included in the start request information (step S43). Note that in this state, the request source terminal (terminal 10aa) and the destination terminal (terminal 10db) have not yet started a call, but the state becomes "during call". Therefore, when another terminal 10 makes an attempt to call the request source terminal (terminal 10aa) or the destination terminal (terminal 10db), a report sound or a message display indicating the "during call" state is output.

The session ID generating unit 56a generates a session ID "se1" for identifying a session (call data session sed) for executing communication with the destination terminal (terminal 10db) requested by the request source terminal (terminal 10aa) (step S44).

The relay device selecting unit 56 selects the relay device 30 for relaying the call between the request source terminal (terminal 10aa) and the destination terminal (terminal 10db), based on the relay device management DB 5001, the terminal management DB 5003, the priority level management DB 5006, and the response time management DB 5008 (step S45).

Here, referring to FIG. 24, a more detailed description is given of the process of step S45. First, the operating state selecting unit 56b selects the relay device IDs (111a, 111b, and 111d) of the relay devices (30a, 30b, and 30d) whose operating states are "online", among the operating states of relay devices 30 managed in the relay device management DB 5001 (see FIG. 9) (step S45-1).

Next, the response time selecting unit 56c performs the relay device selection process based on the response time illustrated in FIG. 20 described above, and extracts the relay devices (step S45-2).

The priority level selecting unit 56d searches the terminal management DB 5003 (see FIG. 11) based on the terminal ID "01aa" of the request source terminal (terminal 10aa) and the terminal ID "01db" of the destination terminal (terminal 10db) included in start communication information sent from the request source terminal (terminal 10aa), and extracts the IP addresses ("1.2.1.3" and "1.3.2.4") of the respective corresponding terminals (10aa and 10db) (step S45-3).

The priority level selecting unit 56d searches the relay device management DB 5001 (see FIG. 9) based on the IP address "1.2.1.3" of the request source terminal (terminal 10aa) and the IP address "1.3.2.4" of the destination terminal (terminal 10db), to check whether the dot addresses in the respective IP addresses ("1.2.1.3" and "1.3.2.4") of the request source terminal (terminal 10aa) and the destination terminal (terminal 10db) are the same as the dot addresses in the respective IP addresses ("1.2.1.2.", "1.2.2.2", and "1.3.2.2") of the relay devices (30a, 30b, and 30d) selected in step S45-2 described above (step S45-4).

Next, the priority level selecting unit 56d refers to the priority level management DB 5006 (see FIG. 14) to determine the point of the address priority level for each of the relay devices (30a, 30b, and 30d) checked in step S45-4 (step S45-5). The results of this determination process can be expressed in a table as illustrated in FIG. 25. Note that FIG. 25 is a diagram illustrating the calculated state of points of the priority level when performing the process of narrowing down the relay devices 30. FIG. 25 indicates the points of the address priority level, the points of the transmission speed priority level, and the aggregate points, for each relay device ID. Furthermore, the points of the address priority level further include points with respect to the request source terminal (terminal 10aa) and points with respect to the destination terminal (terminal 10db) of each relay device 30. The aggregate points are the total points obtained by adding the higher points between the two points of the address priority level described above and the points of the transmission speed priority level.

In the present embodiment, the dot addresses in the IP address "1.2.1.2" of the relay device 30a are "same.same.same.different" with respect to the dot addresses in the IP address "1.2.1.3" of the request source terminal (terminal 10aa), and therefore the point count of the address priority level is "5" as indicated in FIG. 25. Furthermore, as indicated in FIG. 1, the dot addresses in the IP address "1.2.1.2" of the relay device 30a are "same.different.different.different" with respect to the dot addresses in the IP address "1.3.2.4" of the destination terminal (terminal 10db) as indicated in FIG. 14, and therefore the point count of the address priority level is "1" as indicated in FIG. 25. Furthermore, the dot addresses in the IP address "1.2.2.2" of the relay device 30b are "same.same.different.different" with respect to the dot addresses in the IP address "1.2.1.3" of the request source terminal (terminal 10aa), and therefore the point count of the address priority level is "3". Furthermore, the dot addresses in the IP address "1.2.2.2" of the relay device 30b are "same.different.same.different" with respect to the dot addresses in the IP address "1.3.2.4" of the destination terminal (terminal 10db), and therefore the point count of the address priority level is "1". Furthermore, the dot addresses in the IP address "1.3.2.2" of the relay device 30d are "same.different.different.different" with respect to the dot addresses in the IP address "1.2.1.3" of the request source terminal (terminal 10aa), and therefore the point count of the address priority level is "1". Furthermore, the dot addresses in the IP address "1.3.2.2" of the relay device 30d are "same.same.same.different" with respect to the dot addresses in the IP address "1.3.2.4" of the destination terminal (terminal 10db), and therefore the point count of the address priority level is "5".

Next, referring back to FIG. 24, the priority level selecting unit 56d searches the priority level management DB 5006 (see FIG. 15) based on the maximum data transmission speed of each relay device 30 managed in the relay device management DB 5001 (see FIG. 9), to determine the points of the transmission speed priority level for each of the relay devices (30a, 30b, and 30d) obtained by the primary narrowing down process in step S45-2 described above (step S45-6). In the present embodiment, as illustrated in FIG. 9, the maximum data transmission speed of the relay device 30a is 100 (Mbps), and therefore referring to the transmission speed priority level indicated in FIG. 15, the transmission speed priority level is 3 points. Furthermore, similarly, the maximum data transmission speed of the relay device 30b is calculated as 1000 (Mbps), and therefore the transmission speed priority level is 5 points. Furthermore, similarly, the maximum data transmission speed of the relay device 30d is calculated as 10 (Mbps), and therefore the transmission speed priority level is 1 point.

Next, the priority level selecting unit 56d selects the relay device 30 having the highest aggregate point count among the relay devices (30a, 30b, and 30d). The aggregate point count is obtained by aggregating the higher points between the points of the address priority levels with respect to the terminals (10aa and 10db), and the points of the transmission speed priority level (step S45-7). In the present embodiment, as indicated in FIG. 25, the aggregate points for the relay device IDs (111a, 111b, and 111d) are respectively "8", "8", and "6", and therefore either one of the relay device 30a relevant to the relay device ID "111a" or the relay device 30b relevant to the relay device ID "111b" is to be selected.

Next, referring back to FIG. 23, the session managing unit 57 stores and manages a selection session ID "se1" generated in step S44 described above, the terminal ID "01aa" of the request source terminal (terminal 10aa), and the terminal ID "01db" of the destination terminal (terminal 10db) in association with each other in the session management DB 5005 (see FIG. 13) of the storage unit 5000 (step S46).

The transmitting/receiving unit 51 sends the session ID generated by the session ID generating unit 56a and the relay device connection information used for connecting to the relay device 30 selected by the relay device selecting unit 56 (hereinafter referred to as "relay device 30e2"), to the request source terminal (terminal 10aa) via the communication network 2 (step S47). The relay device connection information may include the IP address, authentication information, and a port number, etc., of the relay device 30e2. Accordingly, the terminal 10aa is able to recognize the relay device connection information used for connecting to the relay device 30e2 used for relaying call data, when executing the session having the session ID "se1".

Next, the transmitting/receiving unit 51 sends, to the destination terminal (terminal 10db), the terminal ID "01aa" of the request source terminal (terminal 10aa), request information "Invite" indicating a request to start a call with the destination terminal, start request information including the session ID "se1", the relay device connection information used for connecting to the relay device 30e2, and the IP address of the management system 50 (step S48). Accordingly ,the destination terminal (terminal 10db) is able to receive the above start request information, recognize the relay device connection information used for connecting to the relay device 30e2 used for relaying the call data, and recognize the IP address of the management system 50 that is the transmission source.

Next, referring to FIG. 26, a description is given of a process when a response indicating permission to start communication with the request source terminal (terminal 10aa) is accepted as the user of the destination terminal (terminal 10db) that has received the above start request information presses the operation buttons 108 illustrated in FIG. 5. The operation buttons 108 of the destination terminal (terminal 10db) are pressed, and a response indicating permission to start communication with the request source terminal (terminal 10aa) is accepted (step S49). Next, the transmitting/receiving unit 11 of the destination terminal (terminal 10db) sends start response information to the management system 50. The start response information includes the terminal ID "01db" of the destination terminal (terminal 10db), the terminal ID "01aa" of the request source terminal (terminal 10aa), change request information "Accept" indicating permission to start communication, and the session ID "se1" (step S50).

When the transmitting/receiving unit 51 of the management system 50 receives the start response information, the state managing unit 53 changes the field part of the communication state in the records including the terminal ID "01aa" and the terminal ID "01db" described above in the terminal management table (see FIG. 11), based on the terminal ID "01aa" of the request source terminal (terminal 10aa) and the terminal ID "01db" of the destination terminal (terminal 10db) (step S51).

The transmitting/receiving unit 51 sends, to the request source terminal (terminal 10aa), the start response information including the terminal ID "01db" of the destination terminal (terminal 10db), change request information "Accept" indicating permission to start a call with the destination terminal, and the session ID "se1" (step S52).

When the start response information is accepted, the request source terminal (terminal 10aa) sends the session ID "se1" and the relay device connection information acquired in step S47 to the relay device 30e2 by the transmitting/receiving unit 11, to connect with the relay device 30e2 (step S53). On the other hand, the destination terminal (terminal 10db) sends the session ID "se1" and the relay device connection information acquired in step S48 to the relay device 30e2 by the transmitting/receiving unit 11, to connect with the relay device 30e2 (step S54).

Next, referring to FIG. 27, a description is given of a process by the relay device 30e2 of starting to relay call data communicated between the request source terminal (terminal 10aa) and the destination terminal (terminal 10db). Note that FIG. 27 illustrates of process in which various kinds of management information are all sent and received by the management information session sei.

First, the request source terminal (terminal 10aa) sends relay request information by the transmitting/receiving unit 11 to the management system 50 at a predetermined timing after connecting with the relay device 30e2 (see step S53). The relay request information includes the terminal ID "01aa" of the request source terminal (terminal 10aa), the session ID "se1", and change request information "Join" indicating the request to start the relay (step S71-1).

When the transmitting/receiving unit 51 of the management system 50 receives the relay request information, the state managing unit 53 changes the field part of the communication state in the record including the terminal ID "01aa" in the terminal management table (see FIG. 11), based on the terminal ID "01aa" of the request source terminal (terminal 10aa) included in the relay request information (step S72-1).

The management system 50 sends relay start request information including the terminal ID "01aa" of the request source terminal (terminal 10aa) and the session ID "se1", to the relay device 30e2 (step S73-1). When the relay device 30e2 accepts the relay start request information, the relay device 30e2 sends relay start permission information including report information "OK" indicating to give permission to start the relaying, to the management system 50 (step S74-1). When the management system 50 receives the response, the management system 50 records the time and date, the ID of the relay device 30e2, and the response time in the response time management DB 5008 (step S75-1). Then, the transmitting/receiving unit 51 sends the relay start permission information to the request source terminal (terminal 10aa) (step S76-1). Accordingly, a call data session sed between the request source terminal (terminal 10aa) and the relay device 30e2 is established (step S77-1).

On the other hand, the destination terminal (terminal 10db) sends relay request information to the management system 50 by the transmitting/receiving unit 11 at a predetermined timing after connecting with the relay device 30e2 (see step S54). The relay request information includes the terminal ID "01db" of the destination terminal (terminal 10db), the session ID "se1", and change request information "Join" indicating the request to start the relay (step S71-2).

Next, the management system 50 and the relay device 30e2 execute the same processes as the processes of steps S72-1, S73-1, S74-1, S75-1, S76-1, and S77-1, such that a call data session sed is established between the destination terminal (terminal 10db) and the relay device 30e2 (steps S72-2, S73-2, S74-2, S75-2, S76-2, and S77-2). When the call data session sed between the request source terminal (terminal 10aa) and the relay device 30e2 and the call data session sed between the destination terminal (terminal 10db) and the relay device 30e2 are established, the relay device 30e2 is able to relay three image data items (low resolution image data, medium resolution image data, and high resolution image data) and voice sound data between the terminals (10aa and 10db). Accordingly, the terminals (10aa and 10db) are able to start a TV conference.

Next, referring to FIG. 28, a description is given of a process of sending and receiving image data and voice sound data for making a call in a TV conference between a request source terminal and a destination terminal. Note that the processes of sending and receiving image data and voice sound data and detecting the delay time etc., described below, are the same in both the processes in one direction of sending image data and voice sound data from the terminal 10aa to the terminal 10db, and the processes in the opposite direction of sending image data and voice sound data from the terminal 10db to the terminal 10aa. Therefore, a description is given of the communication in only one direction, and a description of the communication in the opposite direction is omitted.

First, the request source terminal (terminal 10aa) sends, from the transmitting/receiving unit 11 to the relay device 30e2 via the communication network 2, the image data of a subject captured by the imaging unit 14 and voice sound data of voice sound input by the voice sound inputting unit 15a, by the image/voice sound data session sed illustrated in FIG. 2 (step S81). Note that in the present embodiment, the transmitting/receiving unit 11 sends image data having high image quality including the three image data items of low resolution image data, medium resolution image data, and high resolution image data as illustrated in FIGS. 3A through 3C, and voice sound data. Accordingly, the relay device 30e2 receives the image data items of the three resolutions described above and the voice sound data by the transmitting/receiving unit 31. Then, the data quality confirming unit 33 uses the IP address "1.3.2.4" of the destination terminal (terminal 10db) to search the quality change management DB 3001 (see FIG. 8), and extracts the image quality of the corresponding image data to be relayed to confirm the quality of the image of the image data to be relayed (step S82). In the present embodiment, the confirmed image quality of the image data is "high image quality", which is the same as the image quality of the image data received by the transmitting/receiving unit 31, and therefore the relay device 30e2 transfers the image data without changing the image quality and the voice sound data without changing the sound quality to the destination terminal (terminal 10db) by the image/voice sound data session sed (step S83). Accordingly, the destination terminal (terminal 10db) receives the image data having high image quality including the three resolutions of low resolution, medium resolution, and high resolution, and the voice sound data, by the transmitting/receiving unit 11. Then, the display control unit 17 is able to combine the image data items of the three image quality levels and display the image on the display 120, and output voice sound based on the voice sound data from the voice sound outputting unit 15b.

Next, the delay detecting unit 18 of the terminal 10db detects the delay time in receiving the image data received by the transmitting/receiving unit 11, at predetermined time intervals (for example, every second) (step S84). Note that in the present embodiment, the following description is continued assuming that the delay time is 200 (ms).

The transmitting/receiving unit 11 of the destination terminal (terminal 10db) sends delay information indicating the delay time "200 (ms)" to the management system 50 via the communication network 2 by the management information session sei illustrated in FIG. 2 (step S85). Accordingly, the management system 50 is able to recognize the delay time and also recognize the IP address "1.3.2.4" of the terminal 10db that is the transmission source of the delay information.

Next, the delay time managing unit 60 of the management system 50 uses the IP address "1.3.2.4" of the destination terminal (terminal 10db) as a search key to search the terminal management DB 5003 (see FIG. 11) and extract the corresponding terminal ID "01db". Furthermore, the delay time managing unit 60 stores and manages the delay time "200 (ms)" indicated in the delay information in the field part of the delay time in the record of the terminal ID "01db", in the session management table in the session management DB 5005 (see FIG. 13) (step S86).

Next, the quality determining unit 58 uses the above delay time "200 (ms)" as a search key to search the quality management DB 5007 (see FIG. 16), and extract the image quality "medium image quality" of the corresponding image data, to determine the image quality as "medium image quality" (step S87).

Next, the transmitting/receiving unit 51 uses, as a search key, the relay device ID "111a" associated with the above terminal ID "01db" in the session management table in the session management DB 5005 (see FIG. 13), to search the relay device management DB 5001 (see FIG. 9), and extract the IP address "1.2.1.2" of the corresponding relay device 30e2 (step S88). Then, the transmitting/receiving unit 51 sends quality information indicating the image quality "medium image quality" of the image data determined in step S87, to the relay device 30e2 via the communication network 2 by the management information session sei illustrated in FIG. 2 (step S89). The quality information includes the IP address "1.3.2.4" of the destination terminal (terminal 10db) that has been used as the search key in step S86 described above. Accordingly, in the relay device 30e2, the quality change managing unit 34 stores and manages the IP address "1.3.2.4" of the terminal 10 (here, the terminal 10db) that is the transmission destination and the image quality "medium image quality" of the image data to be relayed in association with each other in the quality change management DB 3001 (see FIG. 8) (step S90).

Next, similar to step S81 described above, the terminal 10aa sends, to the relay device 30e2, the image data having high image quality including the three image data items of low resolution image data, medium resolution image data, and high resolution image data, by the image/voice sound data session sed (step S91). Accordingly, similar to step S82 described above, in the relay device 30e2, the data quality confirming unit 33 uses, as the search key, the IP address "1.3.2.4" of the destination terminal (terminal 10db) to search the quality change management DB 3001 (see FIG. 8), and extract the image quality "medium image quality" of the corresponding image data to be relayed, to confirm the quality of the image of the image data to be relayed (step S92). In the present embodiment, the confirmed image quality of the image data is "medium image quality", which is lower than the image quality "high image quality" of the image data received by the transmitting/receiving unit 31. Therefore, the data quality changing unit 35 decreases the image quality of the image data from "high image quality" to "medium image quality" to change the quality of the image of the image data (step S93).

Then, the transmitting/receiving unit 31 sends the image data obtained by changing the image quality of the above image data to "medium image quality" and the voice sound data in which the sound quality of the voice sound has not been changed, to the terminal 10db via the communication network 2, by the image/voice sound data session sed (step S94). Accordingly, the destination terminal (terminal 10db) receives image data having medium image quality including two image data items of low resolution image data and medium resolution image data, and voice sound data, by the transmitting/receiving unit 11. Then, the display control unit 17 is able to combine the image data items of the two resolutions and display the image on the display 120, and output voice sound based on the voice sound data from the voice sound outputting unit 15b.

As described above, when a delay in reception occurs at the destination terminal (terminal 10db) receiving the image data, the relay device 30e2 changes the quality of the image such that the people participating in the TV conference do not perceive any strangeness.

### «Main effects of first embodiment»

As described above, according to the first embodiment, the relay device 30 without congestion is selected based on the response time from the relay device 30. Therefore, for example, when requests to connect to a session from terminals are temporarily concentrated when the management system 50 or the network has recovered from a failure or at the time when business starts at the beginning of the year, it is possible to alleviate congestions at the relay device.

Furthermore, in the related art, when a connection process is not completed within a predetermined time, the user of the terminal 10 cancels the connection request, etc., and performs an operation of making a connection request again, and therefore the delays in call processes at the relay device 30 cumulatively increase. On the other hand, in the present embodiment, when there are no relay devices 30 without congestion, an error is returned to the terminal 10 and new connections are not made. Therefore, it is possible to prevent a situation where delays in call processes cumulatively increase at the relay device 30.

### [Second embodiment]

In the first embodiment, a description is given of an example of selecting the relay device 30 without congestion, based on the response time from the relay device 30.

A second embodiment includes a function by which the terminal 10 satisfying a predetermined condition is able to use a service with high priority, even when congestion has occurred in the relay device 30, in addition to the functions of the first embodiment.

A functional block diagram of the terminals, devices, and systems included in the transmission system 1 according to the second embodiment is the same as the functional block diagram of FIG. 7 according to the first embodiment.

In the second embodiment, the following points are different from the first embodiment.

### (Terminal management table)

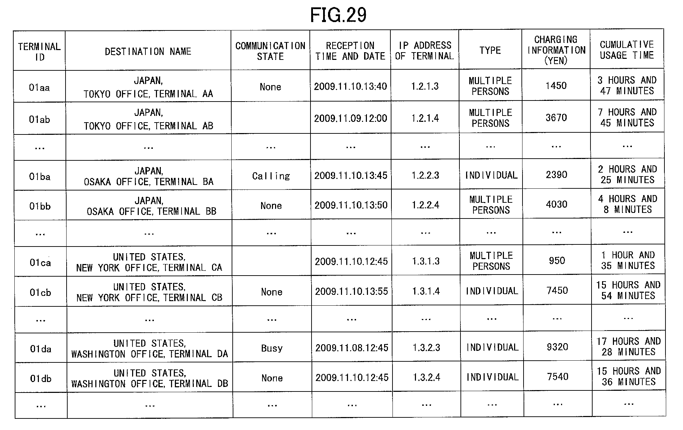

In the second embodiment, the terminal management DB 5003 includes a terminal management table as illustrated in FIG. 29.

In the terminal management table according to the second embodiment, in addition to the items included in the terminal management table according to the first embodiment, the type of the terminal 10, the charging information, and the cumulative usage time are managed in association with each other for each terminal ID of the terminal 10.

The type of the terminal 10 expresses whether the usage mode of the terminal 10 is assumed to be an "individual" or the usage mode of the terminal 10 is assumed to be "multiple persons". Examples of a terminal for an individual are a mobile phone, a smartphone, and a mobile personal computer (PC), etc. Note that multiple persons is a usage mode in which the terminal 10 is shared by two or more people. An example of a terminal for multiple persons (shared terminal) is the terminal exclusively used for conferences described referring to FIG. 4.

The charging information and the cumulative usage time of the terminal 10 respectively indicate the usage fee for each predetermined period (for example, one month) and the time of using the terminal 10 in a conference, etc.

For example, the terminal management table illustrated in FIG. 29 indicates that with respect to the terminal 10aa having the terminal ID "01aa", the type (usage mode) is "multiple persons", the charging information of the current month is 1450 yen, and the cumulative usage time is 3 hours 47 minutes.

### (Response time management table)

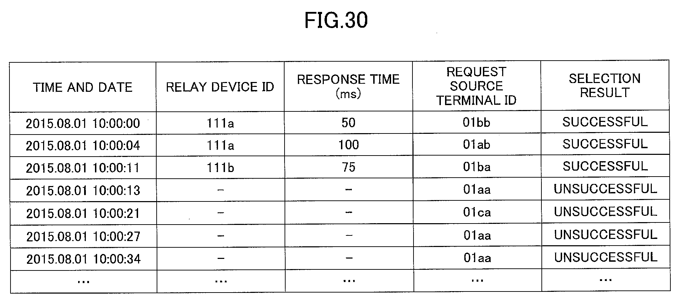

In the second embodiment, the response time management DB 5008 includes a response time management table as illustrated in FIG. 30.

In the response time management table according to the second embodiment, in addition to the history of response times of each relay device 30 included in the response time management table according to the first embodiment, the terminal ID of the of the request source terminal that has requested to start a conference and a selection result indicating whether the relay device 30 has been selected by the relay device selecting unit 56, are managed. For example, in the response time management table illustrated in FIG. 30, the time and date, the relay device ID, the response time, the request source terminal ID, and the selection result are managed in association with each other. In the selection result, "successful" is recorded when the relay device 30 has been selected, and "unsuccessful" is recorded when the relay device 30 has not been selected.

### (Relay device selecting unit in management system)

Next, a description is given of the relay device selecting unit 56 according to the second embodiment. In the second embodiment, the response time selecting unit 56c of the relay device selecting unit 56 includes the following functions in addition to the functions of the first embodiment.

When the response time from the relay device 30 is longer than or equal to a predetermined threshold, the response time selecting unit 56c of the relay device selecting unit 56 according to the second embodiment determines whether to select the relay device 30, according to at least one of two or more terminals 10 to hold a conference. For example, the response time selecting unit 56c according to the second embodiment determines whether to select the relay device 30, according to the type, the charging information, and the cumulative usage time of at least one of two or more terminals 10 to hold a conference, or according to the number of times that the relay device 30 has not been selected by the relay device selecting unit 56.

### «Processes or operations of second embodiment»

Next, a description is given of a method of selecting the relay device 30 in the transmission system 1 according to the second embodiment. The sequence diagram of operations of connecting a session of communicating media between terminals according to the second embodiment is the same as the sequence diagram of FIG. 19 according to the first embodiment.

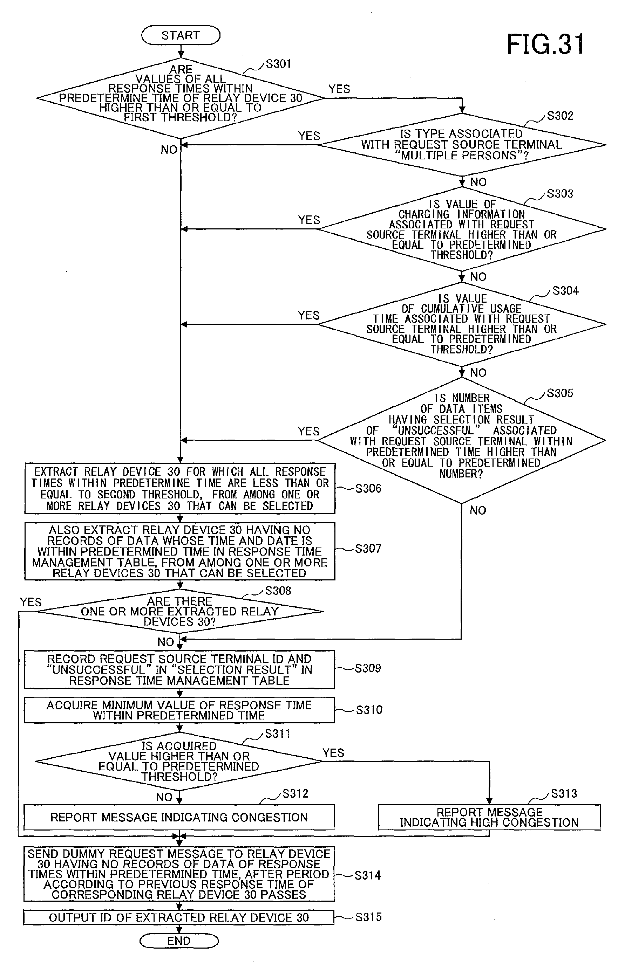

Next, referring to FIG. 31, a description is given of a detailed example of the relay device selection process based on the response time in step S105 of FIG. 19, performed by the response time selecting unit 56c according to the second embodiment. FIG. 31 is a flowchart of an example of the relay device selection process based on the response time according to the second embodiment of the present invention.

The response time selecting unit 56c of the relay device selecting unit 56 refers to the response time management table (see FIG. 30), and determines whether all response times within a predetermine time (for example, 1 minute) from the present time are longer than or equal to a first threshold (for example, 3 seconds), with respect to the relay device 30 that can be selected (step S301). Here, it is assumed that the first threshold is more strict (shorter) than a second threshold (for example, four seconds) of step S306 described below.

When all response times are not longer than or equal to a first threshold (NO in step S301), the process proceeds to step S306 described below.

When all response times are longer than or equal to a first threshold (YES in step S301), the response time selecting unit 56c refers to the terminal management table (see FIG. 29), and determines whether the type associated with the request source terminal is "multiple persons" (step S302). When the type is "multiple persons" (YES in step S302), the process proceeds to step S306 described below.

When the type is not "multiple persons" (NO in step S302), the response time selecting unit 56c refers to the terminal management table (see FIG. 29), and determines whether the charging information associated with the request source terminal is higher than or equal to a predetermined threshold (step S303). When the charging information associated with the request source terminal is higher than or equal to a predetermined threshold (YES in step S303), the process proceeds to step S306 described below.

When the charging information associated with the request source terminal is not higher than or equal to a predetermined threshold (NO in step S303), the response time selecting unit 56c refers to the terminal management table (see FIG. 29), and determines whether the cumulative usage time associated with the request source terminal is higher than or equal to a predetermined threshold (step S304). When the cumulative usage time associated with the request source terminal is higher than or equal to a predetermined threshold (YES in step S304), the process proceeds to step S306 described below.

When the cumulative usage time associated with the request source terminal is not higher than or equal to a predetermined threshold (NO in step S304), the response time selecting unit 56c refers to the response time management table (see FIG. 30), and determines whether the number of data items indicating that the selection result is "unsuccessful" associated with the request source terminal is higher than or equal to a predetermined number (for example, 3 data items) within a predetermined time (for example, 10 minutes) (step S305). When the number of data items indicating that the selection result is "unsuccessful" is higher than or equal to a predetermined number (YES in step S305), the process proceeds to step S306 described below.

When the number of data items indicating that the selection result is "unsuccessful" is not higher than or equal to a predetermined number (for example, 3 data items) (NO in step S305), the process proceeds to step S309 described below.

The processes of step S306 through S308 are the same as the processes of steps S201 through S203 of FIG. 20 according to the first embodiment.

The response time selecting unit 56c records the present time and date, the request source terminal ID, and "unsuccessful" as the selection result, in the response time management table (step S309).

The processes of step S310 through S315 are the same as the processes of steps S204 through S209 of FIG. 20 according to the first embodiment.

### <Modified example of second embodiment>

In the above embodiment, a description is given of an example of determining whether to select and assign the relay device 30 with high priority, based on the type, the charging information, and the cumulative usage time of the request source terminal, or according to the number of times that the relay device 30 has not been selected by the relay device selecting unit 56. In another example, the response time selecting unit 56c may determine whether to select and assign the relay device 30 with high priority, based on the terminal ID, the terminal name, and the IP address, etc., of the request source terminal, instead of or in addition to the information of the example. In this case, the response time selecting unit 56c may store, in advance, at least one of the terminal ID, the terminal name, and the IP address of the request source terminal that is the target for which the relay device 30 is to be selected and assigned with high priority. For example, the relay device 30 is selected and assigned with high priority for a request source terminal having a terminal name including "head office" or a request source terminal having an IP address assigned to the head office. Accordingly, it is possible to select and assign the relay device 30 with high priority for a terminal of an important user.

Furthermore, the response time selecting unit 56c may determine whether to select and assign the relay device 30 with high priority, based on information of a destination terminal of the conference (the type, the charging information, and the cumulative usage time of the destination terminal, the number of times that the relay device 30 has not been selected by the relay device selecting unit 56, the terminal ID, the terminal name, and the IP address of the destination terminal), instead of or in addition to the information of the request source terminal. Note that when the response time selecting unit 56c determines whether to assign the relay device 30 based on both the request source terminal 10 and the destination terminal 10, the response time selecting unit 56c may make this determination based on the average value of the information of the type, the charging information, and the cumulative usage time of both terminals, or the higher value between the values of both terminals. Accordingly, the response time selecting unit 56c is able to select and assign the relay device 30 with high priority according to the information of at least one of the request source terminal 10 and the destination terminal 10.

### «Main effects of second embodiment»

As described above, in addition to the functions of the first embodiment, the second embodiment includes a function by which the terminal 10 satisfying a predetermined condition is able to use a service by using the relay device 30 with high priority, even when there is congestion in the relay device 30 because requests to connect to a session from terminals are temporarily concentrated. For example, the terminal 10 used my multiple persons or a terminal 10 of a heavy user is able to use the service with high priority.

### [Supplementary description of embodiments]

The relay device 30, the management system 50, the program providing system 90, and the maintenance system 100 according to the above embodiments may be constructed by a single computer, or by a plurality of computers assigned to any of the units (functions or means) into which these devices and systems are divided. Furthermore, when the program providing system 90 is constructed by a single computer, a program sent by the program providing system 90 may be divided into a plurality of modules and the program may be sent by sending the modules, or the program may be sent without being divided. Furthermore, when the program providing system 90 is constructed by a plurality of computers, the program may be divided into a plurality of modules and may be sent from the respective computers.

Furthermore, a recording medium such as a CD-ROM storing the terminal-use program, the relay device-use program, and the transmission management-use program of the above embodiments, the HD 204 storing these programs, and the program providing system 90 including the HD 204 are used as program products when providing the terminal-use program, the relay device-use program, and the transmission management-use program to users domestically or overseas.

Furthermore, in the above embodiments, the quality of the image of the image data relayed by the relay device 30 is managed, for example, by focusing on the resolution of the image of the image data, by the quality change management table illustrated in FIG. 8 and the quality management table illustrated in FIG. 16. However, the embodiments are not so limited. The quality of the image data may be managed by focusing on the depth of the image quality of the image data, the sampling frequency in the voice sound of the voice sound data, and the bit length in the voice sound of the voice sound data, as other examples of the quality. Furthermore, the voice sound data may be sent and received by being divided into data items of three types of resolution (high resolution, medium resolution, and low resolution).

Furthermore, in FIGS. 9, 11, and 13, the reception time and date are managed; however, the embodiments are not so limited. At least the reception time may be managed, between the reception time and the reception date.

Furthermore, in the above embodiments, the IP address of the relay device is managed in FIG. 9, and the IP address of the terminal is managed in FIG. 11; however, the embodiments are not so limited. Instead, a Fully Qualified Domain Name (FQDN) of the relay device and the terminal may be managed, as long as the information is relay device identification information for identifying the relay device 30 in the communication network 2 or terminal identification information for identifying the terminal 10 in the communication network 2. In this case, a known Domain Name System (DNS) server acquires the IP address corresponding to the FQDN. Note that the above information may not only be expressed as "relay device identification information for identifying the relay device 30 in the communication network 2", but may also be expressed as "relay device connection destination information indicating the connection destination to the relay device 30 in the communication network 2" or as "relay device destination information indicating the destination to the relay device 30 in the communication network 2". Similarly, the above information may not only be expressed as "terminal identification information for identifying the terminal 10 in the communication network 2", but may also be expressed as "terminal connection destination information indicating the connection destination to the terminal 10 in the communication network 2" or as "terminal destination information indicating the destination to the terminal 10 in the communication network 2".

Furthermore, in the above embodiments, a TV conference system is described as an example of the transmission system 1; however, the embodiments are not so limited. The transmission system 1 may be a phone system such as an IP phone or an Internet phone. Furthermore, the transmission system 1 may be a car navigation system. In this case, for example, one of the terminals 10 corresponds to the car navigation device installed in a vehicle, and the other one of the terminals 10 corresponds to a management terminal or a management server of a management center managing the car navigation or a car navigation device installed in another vehicle. Furthermore, the transmission system 1 may be a communication system of a mobile phone. In this case, for example, the terminal 10 corresponds to a mobile phone.

Furthermore, in the above embodiments, image data and voice sound data are described as examples of content data; however, the embodiments are not so limited. For example, the content data may be tactile sense (touch) data. In this case, the sensation felt when the user touches one of the terminals is transmitted to the other terminal. Furthermore, the content data may be scent (smell) data. In this case, the scent (smell) of one of the terminals is transmitted to the other terminal. Furthermore, the content data may be at least any one of the image data, voice sound data, tactile sense data, and scent data.

Furthermore, in the above embodiments, a TV conference is held by the transmission system 1; however, the embodiments are not so limited. The transmission system 1 may be used for meetings and general conversations between friends and family members, or for presenting information in one direction.

Note that the system configuration according to the above embodiments is one example, and there may be various examples of system configurations according to the purpose and objective.

The transmission management system and the relay device selecting method are not limited to the specific embodiments described in the detailed description, and variations and modifications may be made without departing from the spirit and scope of the present invention.

## Claims

1. A transmission management system for connecting two or more transmission terminals among a plurality of transmission terminals to transmit content data between the two or more transmission terminals via a relay device, the transmission management system comprising:
a transmitter configured to transmit, to the relay device, a request to relay the content data;
a receiver configured to receive, from the relay device that has received the request, a response to the request; and
a selector configured to select the relay device to relay the content data based on a response time from when the request is sent to when the response is received.

2. The transmission management system according to claim 1, further comprising:
a storage configured to store the response time in association with the relay device, wherein
the selector selects the relay device based on the response time stored in the storage.

3. The transmission management system according to claim 1 or 2, wherein
the selector selects, from among a plurality of the relay devices, the relay device for which all of the response times within a predetermined time are less than or equal to a predetermined threshold, or for which an average value of the response times within the predetermined time is less than or equal to a predetermined threshold, or for which a plurality of the response times within the predetermined time are continuously less than or equal to a predetermined threshold.

4. The transmission management system according to any one of claims 1 through 3, wherein when the selector is unable to select the relay device, the selector sends a report indicating that the relay device cannot be selected to at least one of the two or more transmission terminals.

5. The transmission management system according to any one of claims 1 through 3, further comprising:
a state manager configured to manage whether each of the plurality of transmission terminals is in a connection-possible state of being able to connect to another one of the plurality of transmission terminals, wherein
when the selector is unable to select the relay device, the selector sends a report indicating that the relay device cannot be selected to at least one of the plurality of transmission terminals that is in the connection-possible state.

6. The transmission management system according to any one of claims 1 through 5, wherein when the selector is unable to select the relay device, the selector sends a report indicating a congestion status according to the response time.

7. The transmission management system according to any one of claims 1 through 6, wherein
the selector detects the relay device for which the response time within a predetermined time is not recorded, and
the transmitter sends a dummy request to the detected relay device.

8. The transmission management system according to claim 7, wherein
the selector causes the transmitter to wait for a period according to the response time of the detected relay device recorded previously, before transmitting the dummy request.

9. The transmission management system according to any one of claims 1 through 8, wherein when the response time is longer than or equal to a predetermined threshold, the selector determines whether to select the relay device according to at least one of the two or more transmission terminals.

10. The transmission management system according to claim 9, wherein when the response time is longer than or equal to the predetermined threshold, the selector determines whether to select the relay device according to a type, charging information, and a cumulative usage time of at least one of the two or more transmission terminals, or a number of times that the relay device has not been selected.

11. A method for selecting a relay device executed in a transmission management system for connecting two or more transmission terminals among a plurality of transmission terminals to transmit content data between the two or more transmission terminals via the relay device, the method comprising:
transmitting, to the relay device, a request to relay the content data;
receiving, from the relay device that has received the request, a response to the request; and
selecting the relay device to relay the content data based on a response time from when the request is sent to when the response is received.

12. A program that causes a transmission management system to execute a process, the transmission management system connecting two or more transmission terminals among a plurality of transmission terminals to transmit content data between the two or more transmission terminals via a relay device, the process comprising:
transmitting, to the relay device, a request to relay the content data;
receiving, from the relay device that has received the request, a response to the request; and
selecting the relay device to relay the content data based on a response time from when the request is sent to when the response is received.
